# EUROPEAN PATENT APPLICATION

(11) **EP 4 815 603 A1**
(43) Date of publication of application: **30.09.2026**
(21) Application number: 24915108.5
(22) Date of filing: 18.12.2024
(51) Int. Cl.: H04W 72/50, H04W 72/04

(54) **COMMUNICATION METHOD AND APPARATUS**

(30) Priority: 03.01.2024 CN 202410014966
(71) Applicant: Huawei Technologies Co., Ltd., Shenzhen, Guangdong 518129 (CN)
(72) Inventor: WEI, Xiuhong, Shenzhen, Guangdong 518129 (CN); HE, Hongli, Shenzhen, Guangdong 518129 (CN); LI, Xueru, Shenzhen, Guangdong 518129 (CN)
(74) Representative: Gill Jennings & Every LLP
(86) International application number: PCT/CN2024/140155
(87) International publication number: WO 2025/145893

(57) **Abstract**

This application provides a communication method and apparatus, which can be used in the field of integrated communication and sensing. According to the communication method provided in this application, random phase errors caused by frequency hopping between adjacent time windows can be avoided, and performance of a communication system can be improved. The method includes: sending N groups of signals respectively located in N time windows. Each of the N groups of signals includes M signals, and in the N groups of signals, an M^{th} signal in an i^{th} group of signals and the 1^{st} signal in an (i+1)^{th} group of signals occupy a same frequency domain resource. Mᵢ signals in the i^{th} group of signals are located on Mᵢ resources, time domain resources of the Mᵢ resources are different, and a frequency domain resource of any one of the Mᵢ resources is one of Lᵢ frequency domain resources. In addition, two adjacent frequency domain resources in the Lᵢ frequency domain resources partially overlap.

## Description

This application claims priority to Chinese Patent Application No. 202410014966.4, filed with the China National Intellectual Property Administration on January 3, 2024 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

With the development of 5th-generation (5th-generation, 5G) internet-of-things services (for example, wearables, industrial sensors, and video surveillance), research on reduced capability (reduced capability, RedCap) devices gradually draws increasing attention. 5G RedCap devices have low terminal complexity and other advantages. In terms of bandwidth, power consumption, antenna design, and costs, the 5G RedCap devices can effectively balance a large bandwidth, a high rate, a wide connection, and a low latency in 5G, to meet networking requirements of different industries and support a larger internet-of-things market.

However, due to more simplified functions, a bandwidth capability of the RedCap devices is reduced from 100 MHz of normal 5G terminal devices to 20 MHz. Currently, to achieve a high ranging resolution of the RedCap devices, reference signals are typically sent in a frequency-hopping scheme to implement ranging. However, when reference signals need to be sent in a plurality of time windows through frequency hopping, random phase errors are caused between adjacent time windows, and degrades device performance. Therefore, how to avoid phase errors caused by frequency hopping and improve system performance is an important problem to be resolved urgently.

### SUMMARY

This application provides a communication method and apparatus, to avoid random phase errors caused by frequency hopping between adjacent time windows, and improve system performance.

According to a first aspect, an embodiment of this application provides a communication method. The method may be performed by a first device, or may be performed by a component (for example, a chip, a chip system, or a circuit) of the first device. This is not limited in this application. For ease of description, the following uses an example in which the method is performed by the first device for description. The method includes: sending N groups of signals. The N groups of signals are respectively located in N time windows, each of the N groups of signals includes M signals, an M^{th} signal in an i^{th} group of signals and the 1^{st} signal in an (i+1)^{th} group of signals occupy a same frequency domain resource, Mᵢ signals in the i^{th} group of signals are located on Mᵢ resources, time domain resources of the Mᵢ resources are different, a frequency domain resource of any one of the Mᵢ resources is one of Lᵢ frequency domain resources, two adjacent frequency domain resources in the Lᵢ frequency domain resources partially overlap, the i^{th} group of signals and the (i+1)^{th} group of signals belong to the N groups of signals, i is any integer greater than or equal to 1 and less than or equal to N-1, N, M, or Mi is any integer greater than or equal to 2, and Lᵢ is any integer greater than or equal to 2 and less than or equal to Mᵢ.

A time length occupied by each time window may be a time interval between a start moment of a previous time window and a start moment of a subsequent time window, a time interval between an end moment of the current time window and an end moment of the subsequent time window, or a time interval between an intermediate moment of the current time window and an intermediate moment of the subsequent time window. This is not limited in this application.

It should be noted that, that a signal is located in a time window or sent in the time window may be that the signal is located in a partial time period in the time window or sent in the partial time period in the time window. The signal may be concentrated in a time period in the time window, for example, several earliest time domain resources. This is not limited in this application. Whether the N time windows occupies a same time length is not limited in the solution of this application. It may be understood that when the N time windows have a same time length, the solution of this application may be applied to a scenario in which frequency hopping signals are periodically sent. The frequency hopping signals are periodically sent with each period length as the unit. Therefore, there may be a plurality of time windows in time domain, and a time length corresponding to each time window may be understood as the period length. In this application, one of the plurality of time windows may also be referred to as one period. Therefore, the N time windows may be understood as N periods. Based on the foregoing solution, in adjacent time windows, a frequency domain resource of the last resource in a current time window is set to be the same as a frequency domain resource of the 1^{st} resource in a subsequent time window, so that a sending device may not need to perform frequency hopping when sending the last signal in the current time window and the 1^{st} signal in the subsequent time window, thereby avoiding an additional random phase error caused by frequency hopping between the adjacent time windows. In addition, any two adjacent frequency domain resources in a plurality of frequency domain resources in each time window are set to partially overlap, so that random phase errors caused by frequency hopping in each time window can be easily estimated.

With reference to the first aspect, in some implementations of the first aspect, Mᵢ₊₁ signals in the (i+1)^{th} group of signals are located on Mᵢ₊₁ resources, time domain resources of the Mᵢ₊₁ resources are different, a frequency domain resource of any one of the Mᵢ₊₁ resources is one of Lᵢ₊₁ frequency domain resources, two adjacent frequency domain resources in the Lᵢ₊₁ frequency domain resources partially overlap, the Lᵢ₊₁ frequency domain resources are the same as the Lᵢ frequency domain resources, and Lᵢ₊₁ is any integer greater than or equal to 2 and less than or equal to Mᵢ₊₁.

With reference to the first aspect, in some implementations of the first aspect, a frequency domain resource of an m^{th} resource in the Mᵢ resources is different from a frequency domain resource of an m^{th} resource in the Mᵢ₊₁ resources, and m is any integer greater than or equal to 1 and less than or equal to M.

With reference to the first aspect, in some implementations of the first aspect, a frequency of a frequency domain resource of an x^{th} resource in the Mᵢ resources or the Mᵢ₊₁ resources is lower than a frequency of a frequency domain resource of an (x+1)^{th} resource, and x is any integer greater than or equal to 1 and less than or equal to M-1; or a frequency domain resource of a y^{th} resource in the Mᵢ resources or the Mᵢ₊₁ resources is a frequency domain resource with a highest frequency, a frequency domain resource of a (y+1)^{th} resource is a frequency domain resource with a lowest frequency, and y is an integer greater than or equal to 1 and less than or equal to M-1.

With reference to the first aspect, in some implementations of the first aspect, that the frequency domain resource of the y^{th} resource in the Mᵢ resources or the Mᵢ₊₁ resources is the frequency domain resource with the highest frequency, and the frequency domain resource of the (y+1)^{th} resource is the frequency domain resource with the lowest frequency includes:
when a time domain resource of the y^{th} resource is the 1^{st} time domain resource, a frequency of a frequency domain resource of a t^{th} resource in a plurality of resources after a time domain resource of the (y+1)^{th} resource is lower than a frequency of a frequency domain resource of a (t+1)^{th} resource; or
when the time domain resource of the (y+1)^{th} resource is the last time domain resource, a frequency of a frequency domain resource of a t^{th} resource in a plurality of resources before the time domain resource of the y^{th} resource is lower than a frequency of a frequency domain resource of a (t+1)^{th} resource; or
when the time domain resource of the y^{th} resource is not the 1^{st} time domain resource, and the time domain resource of the (y+1)^{th} resource is not the last time domain resource, a frequency of a frequency domain resource of a t^{th} resource in a plurality of resources before the time domain resource of the y^{th} resource is lower than a frequency of a frequency domain resource of a (t+1)^{th} resource, and a frequency of a frequency domain resource of a t^{th} resource in a plurality of resources after the time domain resource of the (y+1)^{th} resource is lower than a frequency of a frequency domain resource of a (t+1)^{th} resource, where t is an integer greater than or equal to 1, and t is less than y.

With reference to the first aspect, in some implementations of the first aspect, a frequency domain resource of the 1^{st} resource in the Mᵢ resources is a frequency domain resource with a lowest frequency, and a frequency domain resource of the 1^{st} resource in the Mᵢ₊₁ resources is a frequency domain resource with a highest frequency; or a frequency of the frequency domain resource of the 1^{st} resource in the Mᵢ resources is higher than a frequency of the frequency domain resource of the 1^{st} resource in the Mᵢ₊₁ resources.

With reference to the first aspect, in some implementations of the first aspect, a frequency of a frequency domain resource of an x^{th} resource in the Mᵢ resources or the Mᵢ₊₁ resources is higher than a frequency of a frequency domain resource of an (x+1)^{th} resource, and x is any integer greater than or equal to 1 and less than or equal to M-1; or a frequency domain resource of a y^{th} resource in the Mᵢ resources or the Mᵢ₊₁ resources is a frequency domain resource with a lowest frequency, a frequency domain resource of a (y+1)^{th} resource is a frequency domain resource with a highest frequency, and y is an integer greater than or equal to 1 and less than or equal to M-1.

With reference to the first aspect, in some implementations of the first aspect, that the frequency domain resource of the y^{th} resource in the Mᵢ resources or the Mᵢ₊₁ resources is the frequency domain resource with the lowest frequency, and the frequency domain resource of the (y+1)^{th} resource is the frequency domain resource with the highest frequency includes:
when a time domain resource of the y^{th} resource is the 1^{st} time domain resource, a frequency of a frequency domain resource of a t^{th} resource in a plurality of resources after a time domain resource of the (y+1)^{th} resource is higher than a frequency of a frequency domain resource of a (t+1)^{th} resource; or
when the time domain resource of the (y+1)^{th} resource is the last time domain resource, a frequency of a frequency domain resource of a t^{th} resource in a plurality of resources before the time domain resource of the y^{th} resource is higher than a frequency of a frequency domain resource of a (t+1)^{th} resource; or
when the time domain resource of the y^{th} resource is not the 1^{st} time domain resource, and the time domain resource of the (y+1)^{th} resource is not the last time domain resource, a frequency of a frequency domain resource of a t^{th} resource in a plurality of resources before the time domain resource of the y^{th} resource is higher than a frequency of a frequency domain resource of a (t+1)^{th} resource, and a frequency of a frequency domain resource of a t^{th} resource in a plurality of resources after the time domain resource of the (y+1)^{th} resource is higher than a frequency of a frequency domain resource of a (t+1)^{th} resource, where t is an integer greater than or equal to 1, and t is any integer less than y.

With reference to the first aspect, in some implementations of the first aspect, a frequency domain resource of the 1^{st} resource in the Mᵢ resources is a frequency domain resource with a highest frequency, and a frequency domain resource of the 1^{st} resource in the Mᵢ₊₁ resources is a frequency domain resource with a lowest frequency; or a frequency of the frequency domain resource of the 1^{st} resource in the Mᵢ resources is lower than a frequency of the frequency domain resource of the 1^{st} resource in the Mᵢ₊₁ resources.

With reference to the first aspect, in some implementations of the first aspect, a time interval between a time domain resource of a j^{th} resource in the Mᵢ resources and a time domain resource of a p^{th} resource in the Mᵢ₊₁ resources is *T* + *Tₛ* or *T* - (*M* - 1)*Tₛ*, a frequency domain resource of the j^{th} resource is the same as a frequency domain resource of the p^{th} resource, j and p are any integers greater than or equal to 1 and less than or equal to M, *Tₛ* is a time interval between two adjacent time domain resources in the Mᵢ resources or the Mᵢ₊₁ resources, and T is an interval between a start sending moment of the Mᵢ signals and a start sending moment of the Mᵢ₊₁ signals.

With reference to the first aspect, in some implementations of the first aspect, a frequency domain resource of a y^{th} resource in the Mᵢ resources is a frequency domain resource with a highest frequency, a frequency domain resource of a (y+1)^{th} resource is a frequency domain resource with a lowest frequency, a frequency domain resource of a w^{th} resource in the Mᵢ₊₁ resources is a frequency domain resource with a lowest frequency, a frequency domain resource of a (w+1)^{th} resource is a frequency domain resource with a highest frequency, and y and w are integers greater than or equal to 1 and less than or equal to M-1; or a frequency of a frequency domain resource of an x^{th} resource in the Mᵢ resources is lower than a frequency of a frequency domain resource of an (x+1)^{th} resource, a frequency of a frequency domain resource of an n^{th} resource in the Mᵢ₊₁ resources is higher than a frequency of a frequency domain resource of an (n+1)^{th} resource, and x and n are any integers greater than or equal to 1 and less than or equal to M-1.

With reference to the first aspect, in some implementations of the first aspect, that the frequency domain resource of the y^{th} resource in the Mᵢ resources is the frequency domain resource with the highest frequency, and the frequency domain resource of the (y+1)^{th} resource is the frequency domain resource with the lowest frequency includes:
when a time domain resource of the y^{th} resource is the 1^{st} time domain resource, a frequency of a frequency domain resource of a t^{th} resource in a plurality of resources after a time domain resource of the (y+1)^{th} resource is lower than a frequency of a frequency domain resource of a (t+1)^{th} resource; or
when the time domain resource of the (y+1)^{th} resource is the last time domain resource, a frequency of a frequency domain resource of a t^{th} resource in a plurality of resources before the time domain resource of the y^{th} resource is lower than a frequency of a frequency domain resource of a (t+1)^{th} resource; or
when the time domain resource of the y^{th} resource is not the 1^{st} time domain resource, and the time domain resource of the (y+1)^{th} resource is not the last time domain resource, a frequency of a frequency domain resource of a t^{th} resource in a plurality of resources before the time domain resource of the y^{th} resource is lower than a frequency of a frequency domain resource of a (t+1)^{th} resource, and a frequency of a frequency domain resource of a t^{th} resource in a plurality of resources after the time domain resource of the (y+1)^{th} resource is lower than a frequency of a frequency domain resource of a (t+1)^{th} resource, where t is an integer greater than or equal to 1, and t is less than y.

That the frequency domain resource of the w^{th} resource in the Mᵢ₊₁ resources is the frequency domain resource with the lowest frequency, and the frequency domain resource of the (w+1)^{th} resource is the frequency domain resource with the highest frequency includes:
when a time domain resource of the w^{th} resource is the 1^{st} time domain resource, a frequency of a frequency domain resource of a t^{th} resource in a plurality of resources after a time domain resource of the (w+1)^{th} resource is higher than a frequency of a frequency domain resource of a (t+1)^{th} resource; or
when the time domain resource of the (w+1)^{th} resource is the last time domain resource, a frequency of a frequency domain resource of a t^{th} resource in a plurality of resources before the time domain resource of the w^{th} resource is higher than a frequency of a frequency domain resource of a (t+1)^{th} resource; or
when the time domain resource of the w^{th} resource is not the 1^{st} time domain resource, and the time domain resource of the (w+1)^{th} resource is not the last time domain resource, a frequency of a frequency domain resource of a t^{th} resource in a plurality of resources before the time domain resource of the w^{th} resource is higher than a frequency of a frequency domain resource of a (t+1)^{th} resource, and a frequency of a frequency domain resource of a t^{th} resource in a plurality of resources after the time domain resource of the (w+1)^{th} resource is higher than a frequency of a frequency domain resource of a (t+1)^{th} resource, where t is an integer greater than or equal to 1, and t is any integer less than w.

With reference to the first aspect, in some implementations of the first aspect, a frequency domain resource of a y^{th} resource in the Mᵢ resources is a frequency domain resource with a lowest frequency, a frequency domain resource of a (y+1)^{th} resource is a frequency domain resource with a highest frequency, a frequency domain resource of a w^{th} resource in the Mᵢ₊₁ resources is a frequency domain resource with a highest frequency, a frequency domain resource of a (w+1)^{th} resource is a frequency domain resource with a lowest frequency, and y and w are integers greater than or equal to 1 and less than or equal to M-1; or a frequency of a frequency domain resource of an x^{th} resource in the Mᵢ resources is higher than a frequency of a frequency domain resource of an (x+1)^{th} resource, a frequency of a frequency domain resource of an n^{th} resource in the Mᵢ₊₁ resources is lower than a frequency of a frequency domain resource of an (n+1)^{th} resource, and x and n are any integers greater than or equal to 1 and less than or equal to M-1.

With reference to the first aspect, in some implementations of the first aspect, a time interval between a time domain resource of a j^{th} resource in the Mᵢ resources and a time domain resource of a p^{th} resource in the Mᵢ₊₁ resources is *T* + (*M* - 1 - 2*q*)*Tₛ* or *T* - (*M* - 1 - 2*q*)*Tₛ*, a frequency domain resource of the j^{th} resource is the same as a frequency domain resource of the p^{th} resource, j and p are any integers greater than or equal to 1 and less than or equal to M, *Tₛ* is a time interval between two adjacent time domain resources in the Mᵢ resources or the Mᵢ₊₁ resources, *q* is an integer greater than or equal to 0 and *q* is less than a quantity of frequency domain resources in the Mᵢ resources or the Mᵢ₊₁ resources, and T is an interval between a start sending moment of the Mᵢ signals and a start sending moment of the Mᵢ₊₁ signals.

With reference to the first aspect, in some implementations of the first aspect, the method further includes: sending a plurality of pieces of information. Each of the plurality of pieces of information indicates a plurality of resource reservation periods, the time interval between the time domain resource of the j^{th} resource in the Mᵢ resources and the time domain resource of the p^{th} resource in the Mᵢ₊₁ resources is one of the plurality of resource reservation periods, the frequency domain resource of the j^{th} resource is the same as the frequency domain resource of the p^{th} resource, and j and p are any integers greater than or equal to 1 and less than or equal to M.

With reference to the first aspect, in some implementations of the first aspect, the sending the plurality of pieces of information includes: sending M pieces of information in each time window. Each of the M pieces of information indicates a resource reservation period of each of the M signals.

With reference to the first aspect, in some implementations of the first aspect, the method further includes: sending the plurality of pieces of information in each of the N time windows.

With reference to the first aspect, in some implementations of the first aspect, a quantity of frequency resources occupied by the M signals is the same as a quantity of time domain resources occupied by the M signals.

With reference to the first aspect, in some implementations of the first aspect, a frequency domain resource of the 1^{st} resource in the Mᵢ resources is the same as a frequency domain resource of an M^{th} resource, a frequency domain resource of the 1^{st} resource in the Mᵢ₊₁ resources is the same as a frequency domain resource of an M^{th} resource, a frequency domain resource of an m^{th} resource in the Mᵢ resources is the same as a frequency domain resource of an m^{th} resource in the Mᵢ₊₁ resources, and m is any integer greater than or equal to 1 and less than or equal to M.

With reference to the first aspect, in some implementations of the first aspect, the frequency domain resource of the 1^{st} resource in the Mᵢ resources and the frequency domain resource of the M^{th} resource are frequency domain resources with a lowest frequency; or the frequency domain resource of the 1^{st} resource in the Mᵢ resources and the frequency domain resource of the M^{th} resource are frequency domain resources with a highest frequency.

With reference to the first aspect, in some implementations of the first aspect, a quantity of frequency resources occupied by the M signals is less than a quantity of time domain resources occupied by the M signals.

With reference to the first aspect, in some implementations of the first aspect, the method further includes: determining the N groups of signals and/or the M signals.

With reference to the first aspect, in some implementations of the first aspect, the N time windows occupy a same time length.

With reference to the first aspect, in some implementations of the first aspect, the N groups of signals are used for sensing.

According to a second aspect, an embodiment of this application provides a communication method. The method may be performed by a second device, or may be performed by a component (for example, a chip, a chip system, or a circuit) of the second device, or may be performed by a component (for example, a central unit (central unit, CU), a distributed unit (distributed unit, DU), or a radio unit (radio unit, RU)) that can complete a part of or all functions of the second device. This is not limited in this application. For ease of description, the following uses an example in which the method is performed by the second device for description. The method includes: receiving N groups of signals. The N groups of signals are respectively located in N time windows, each of the N groups of signals includes M signals, an M^{th} signal in an i^{th} group of signals and the 1^{st} signal in an (i+1)^{th} group of signals occupy a same frequency domain resource, Mᵢ signals in the i^{th} group of signals are located on Mᵢ resources, time domain resources of the Mᵢ resources are different, a frequency domain resource of any one of the Mᵢ resources is one of Lᵢ frequency domain resources, two adjacent frequency domain resources in the Lᵢ frequency domain resources partially overlap, the i^{th} group of signals and the (i+1)^{th} group of signals belong to the N groups of signals, i is any integer greater than or equal to 1 and less than or equal to N-1, N, M, or Mi is any integer greater than or equal to 2, and Lᵢ is any integer greater than or equal to 2 and less than or equal to Mᵢ.

With reference to the second aspect, in some implementations of the second aspect, Mᵢ₊₁ signals in the (i+1)^{th} group of signals are located on Mᵢ₊₁ resources, time domain resources of the Mᵢ₊₁ resources are different, a frequency domain resource of any one of the Mᵢ₊₁ resources is one of Lᵢ₊₁ frequency domain resources, two adjacent frequency domain resources in the Lᵢ₊₁ frequency domain resources partially overlap, the Lᵢ₊₁ frequency domain resources are the same as the Lᵢ frequency domain resources, and Lᵢ₊₁ is any integer greater than or equal to 2 and less than or equal to Mᵢ₊₁.

With reference to the second aspect, in some implementations of the second aspect, a frequency domain resource of an m^{th} resource in the Mᵢ resources is different from a frequency domain resource of an m^{th} resource in the Mᵢ₊₁ resources, and m is any integer greater than or equal to 1 and less than or equal to M.

With reference to the second aspect, in some implementations of the second aspect, a frequency of a frequency domain resource of an x^{th} resource in the Mᵢ resources or the Mᵢ₊₁ resources is lower than a frequency of a frequency domain resource of an (x+1)^{th} resource, and x is any integer greater than or equal to 1 and less than or equal to M-1; or a frequency domain resource of a y^{th} resource in the Mᵢ resources or the Mᵢ₊₁ resources is a frequency domain resource with a highest frequency, a frequency domain resource of a (y+1)^{th} resource is a frequency domain resource with a lowest frequency, and y is an integer greater than or equal to 1 and less than or equal to M-1.

With reference to the second aspect, in some implementations of the second aspect, that the frequency domain resource of the y^{th} resource in the Mᵢ resources or the Mᵢ₊₁ resources is the frequency domain resource with the highest frequency, and the frequency domain resource of the (y+1)^{th} resource is the frequency domain resource with the lowest frequency includes:
when a time domain resource of the y^{th} resource is the 1^{st} time domain resource, a frequency of a frequency domain resource of a t^{th} resource in a plurality of resources after a time domain resource of the (y+1)^{th} resource is lower than a frequency of a frequency domain resource of a (t+1)^{th} resource; or
when the time domain resource of the (y+1)^{th} resource is the last time domain resource, a frequency of a frequency domain resource of a t^{th} resource in a plurality of resources before the time domain resource of the y^{th} resource is lower than a frequency of a frequency domain resource of a (t+1)^{th} resource; or
when the time domain resource of the y^{th} resource is not the 1^{st} time domain resource, and the time domain resource of the (y+1)^{th} resource is not the last time domain resource, a frequency of a frequency domain resource of a t^{th} resource in a plurality of resources before the time domain resource of the y^{th} resource is lower than a frequency of a frequency domain resource of a (t+1)^{th} resource, and a frequency of a frequency domain resource of a t^{th} resource in a plurality of resources after the time domain resource of the (y+1)^{th} resource is lower than a frequency of a frequency domain resource of a (t+1)^{th} resource, where t is an integer greater than or equal to 1, and t is less than y.

With reference to the second aspect, in some implementations of the second aspect, a frequency domain resource of the 1^{st} resource in the Mᵢ resources is a frequency domain resource with a lowest frequency, and a frequency domain resource of the 1^{st} resource in the Mᵢ₊₁ resources is a frequency domain resource with a highest frequency; or a frequency of the frequency domain resource of the 1^{st} resource in the Mᵢ resources is higher than a frequency of the frequency domain resource of the 1^{st} resource in the Mᵢ₊₁ resources.

With reference to the second aspect, in some implementations of the second aspect, a frequency of a frequency domain resource of an x^{th} resource in the Mᵢ resources or the Mᵢ₊₁ resources is higher than a frequency of a frequency domain resource of an (x+1)^{th} resource, and x is any integer greater than or equal to 1 and less than or equal to M-1; or a frequency domain resource of a y^{th} resource in the Mᵢ resources or the Mᵢ₊₁ resources is a frequency domain resource with a lowest frequency, a frequency domain resource of a (y+1)^{th} resource is a frequency domain resource with a highest frequency, and y is an integer greater than or equal to 1 and less than or equal to M-1.

With reference to the second aspect, in some implementations of the second aspect, that the frequency domain resource of the y^{th} resource in the Mᵢ resources or the Mᵢ₊₁ resources is the frequency domain resource with the lowest frequency, and the frequency domain resource of the (y+1)^{th} resource is the frequency domain resource with the highest frequency includes:
when a time domain resource of the y^{th} resource is the 1^{st} time domain resource, a frequency of a frequency domain resource of a t^{th} resource in a plurality of resources after a time domain resource of the (y+1)^{th} resource is higher than a frequency of a frequency domain resource of a (t+1)^{th} resource; or
when the time domain resource of the (y+1)^{th} resource is the last time domain resource, a frequency of a frequency domain resource of a t^{th} resource in a plurality of resources before the time domain resource of the y^{th} resource is higher than a frequency of a frequency domain resource of a (t+1)^{th} resource; or
when the time domain resource of the y^{th} resource is not the 1^{st} time domain resource, and the time domain resource of the (y+1)^{th} resource is not the last time domain resource, a frequency of a frequency domain resource of a t^{th} resource in a plurality of resources before the time domain resource of the y^{th} resource is higher than a frequency of a frequency domain resource of a (t+1)^{th} resource, and a frequency of a frequency domain resource of a t^{th} resource in a plurality of resources after the time domain resource of the (y+1)^{th} resource is higher than a frequency of a frequency domain resource of a (t+1)^{th} resource, where t is an integer greater than or equal to 1, and t is any integer less than y.

With reference to the second aspect, in some implementations of the second aspect, a frequency domain resource of the 1^{st} resource in the Mᵢ resources is a frequency domain resource with a highest frequency, and a frequency domain resource of the 1^{st} resource in the Mᵢ₊₁ resources is a frequency domain resource with a lowest frequency; or a frequency of the frequency domain resource of the 1^{st} resource in the Mᵢ resources is lower than a frequency of the frequency domain resource of the 1^{st} resource in the Mᵢ₊₁ resources.

With reference to the second aspect, in some implementations of the second aspect, a time interval between a time domain resource of a j^{th} resource in the Mᵢ resources and a time domain resource of a p^{th} resource in the Mᵢ₊₁ resources is *T* + *Tₛ* or *T* - (*M* - 1)*Tₛ*, a frequency domain resource of the j^{th} resource is the same as a frequency domain resource of the p^{th} resource, j and p are any integers greater than or equal to 1 and less than or equal to M, *Tₛ* is a time interval between two adjacent time domain resources in the Mᵢ resources or the Mᵢ₊₁ resources, and T is an interval between a start sending moment of the Mᵢ signals and a start sending moment of the Mᵢ₊₁ signals.

With reference to the second aspect, in some implementations of the second aspect, a frequency domain resource of a y^{th} resource in the Mᵢ resources is a frequency domain resource with a highest frequency, a frequency domain resource of a (y+1)^{th} resource is a frequency domain resource with a lowest frequency, a frequency domain resource of a w^{th} resource in the Mᵢ₊₁ resources is a frequency domain resource with a lowest frequency, a frequency domain resource of a (w+1)^{th} resource is a frequency domain resource with a highest frequency, and y and w are integers greater than or equal to 1 and less than or equal to M-1; or a frequency of a frequency domain resource of an x^{th} resource in the Mᵢ resources is lower than a frequency of a frequency domain resource of an (x+1)^{th} resource, a frequency of a frequency domain resource of an n^{th} resource in the Mᵢ₊₁ resources is higher than a frequency of a frequency domain resource of an (n+1)^{th} resource, and x and n are any integers greater than or equal to 1 and less than or equal to M-1.

With reference to the second aspect, in some implementations of the second aspect, that the frequency domain resource of the y^{th} resource in the Mᵢ resources is the frequency domain resource with the highest frequency, and the frequency domain resource of the (y+1)^{th} resource is the frequency domain resource with the lowest frequency includes:
when a time domain resource of the y^{th} resource is the 1^{st} time domain resource, a frequency of a frequency domain resource of a t^{th} resource in a plurality of resources after a time domain resource of the (y+1)^{th} resource is lower than a frequency of a frequency domain resource of a (t+1)^{th} resource; or
when the time domain resource of the (y+1)^{th} resource is the last time domain resource, a frequency of a frequency domain resource of a t^{th} resource in a plurality of resources before the time domain resource of the y^{th} resource is lower than a frequency of a frequency domain resource of a (t+1)^{th} resource; or
when the time domain resource of the y^{th} resource is not the 1^{st} time domain resource, and the time domain resource of the (y+1)^{th} resource is not the last time domain resource, a frequency of a frequency domain resource of a t^{th} resource in a plurality of resources before the time domain resource of the y^{th} resource is lower than a frequency of a frequency domain resource of a (t+1)^{th} resource, and a frequency of a frequency domain resource of a t^{th} resource in a plurality of resources after the time domain resource of the (y+1)^{th} resource is lower than a frequency of a frequency domain resource of a (t+1)^{th} resource, where t is an integer greater than or equal to 1, and t is less than y.

That the frequency domain resource of the w^{th} resource in the Mᵢ₊₁ resources is the frequency domain resource with the lowest frequency, and the frequency domain resource of the (w+1)^{th} resource is the frequency domain resource with the highest frequency includes:
when a time domain resource of the w^{th} resource is the 1^{st} time domain resource, a frequency of a frequency domain resource of a t^{th} resource in a plurality of resources after a time domain resource of the (w+1)^{th} resource is higher than a frequency of a frequency domain resource of a (t+1)^{th} resource; or
when the time domain resource of the (w+1)^{th} resource is the last time domain resource, a frequency of a frequency domain resource of a t^{th} resource in a plurality of resources before the time domain resource of the w^{th} resource is higher than a frequency of a frequency domain resource of a (t+1)^{th} resource; or
when the time domain resource of the w^{th} resource is not the 1^{st} time domain resource, and the time domain resource of the (w+1)^{th} resource is not the last time domain resource, a frequency of a frequency domain resource of a t^{th} resource in a plurality of resources before the time domain resource of the w^{th} resource is higher than a frequency of a frequency domain resource of a (t+1)^{th} resource, and a frequency of a frequency domain resource of a t^{th} resource in a plurality of resources after the time domain resource of the (w+1)^{th} resource is higher than a frequency of a frequency domain resource of a (t+1)^{th} resource, where t is an integer greater than or equal to 1, and t is any integer less than w.

With reference to the second aspect, in some implementations of the second aspect, a frequency domain resource of a y^{th} resource in the Mᵢ resources is a frequency domain resource with a lowest frequency, a frequency domain resource of a (y+1)^{th} resource is a frequency domain resource with a highest frequency, a frequency domain resource of a w^{th} resource in the Mᵢ₊₁ resources is a frequency domain resource with a highest frequency, a frequency domain resource of a (w+1)^{th} resource is a frequency domain resource with a lowest frequency, and y and w are integers greater than or equal to 1 and less than or equal to M-1; or a frequency of a frequency domain resource of an x^{th} resource in the Mᵢ resources is higher than a frequency of a frequency domain resource of an (x+1)^{th} resource, a frequency of a frequency domain resource of an n^{th} resource in the Mᵢ₊₁ resources is lower than a frequency of a frequency domain resource of an (n+1)^{th} resource, and x and n are any integers greater than or equal to 1 and less than or equal to M-1.

With reference to the second aspect, in some implementations of the second aspect, a time interval between a time domain resource of a j^{th} resource in the Mᵢ resources and a time domain resource of a p^{th} resource in the Mᵢ₊₁ resources is *T* + (*M* - 1 - 2*q*)*Tₛ* or *T* - (*M* - 1 - 2*q*)*Tₛ*, a frequency domain resource of the j^{th} resource is the same as a frequency domain resource of the p^{th} resource, j and p are any integers greater than or equal to 1 and less than or equal to M, *Tₛ* is a time interval between two adjacent time domain resources in the Mᵢ resources or the Mᵢ₊₁ resources, *q* is an integer greater than or equal to 0 and *q* is less than a quantity of frequency domain resources in the Mᵢ resources or the Mᵢ₊₁ resources, and T is an interval between a start sending moment of the Mᵢ signals and a start sending moment of the Mᵢ₊₁ signals.

With reference to the second aspect, in some implementations of the second aspect, the method further includes: receiving a plurality of pieces of information. Each of the plurality of pieces of information indicates a plurality of resource reservation periods, the time interval between the time domain resource of the j^{th} resource in the Mᵢ resources and the time domain resource of the p^{th} resource in the Mᵢ₊₁ resources is one of the plurality of resource reservation periods, the frequency domain resource of the j^{th} resource is the same as the frequency domain resource of the p^{th} resource, and j and p are any integers greater than or equal to 1 and less than or equal to M.

With reference to the second aspect, in some implementations of the second aspect, the receiving the plurality of pieces of information includes: receiving M pieces of information in each time window. Each of the M pieces of information indicates a resource reservation period of each of the M signals.

With reference to the second aspect, in some implementations of the second aspect, the method further includes: receiving the plurality of pieces of information in each of the N time windows.

With reference to the second aspect, in some implementations of the second aspect, a quantity of frequency resources occupied by the M signals is the same as a quantity of time domain resources occupied by the M signals.

With reference to the second aspect, in some implementations of the second aspect, a frequency domain resource of the 1^{st} resource in the Mᵢ resources is the same as a frequency domain resource of an M^{th} resource, a frequency domain resource of the 1^{st} resource in the Mᵢ₊₁ resources is the same as a frequency domain resource of an M^{th} resource, a frequency domain resource of an m^{th} resource in the Mᵢ resources is the same as a frequency domain resource of an m^{th} resource in the Mᵢ₊₁ resources, and m is any integer greater than or equal to 1 and less than or equal to M.

With reference to the second aspect, in some implementations of the second aspect, the frequency domain resource of the 1^{st} resource in the Mᵢ resources and the frequency domain resource of the M^{th} resource are frequency domain resources with a lowest frequency; or the frequency domain resource of the 1^{st} resource in the Mᵢ resources and the frequency domain resource of the M^{th} resource are frequency domain resources with a highest frequency.

With reference to the second aspect, in some implementations of the second aspect, a quantity of frequency resources occupied by the M signals is less than a quantity of time domain resources occupied by the M signals.

With reference to the second aspect, in some implementations of the second aspect, the N time windows occupy a same time length.

With reference to the second aspect, in some implementations of the second aspect, the N groups of signals are used for sensing.

According to a third aspect, an embodiment of this application provides a communication apparatus. The communication apparatus is configured to perform any one of the first aspect and the implementations of the first aspect. Specifically, the communication apparatus includes a processor. The processor is configured to invoke and run a computer program, to enable the communication apparatus to perform any one of the first aspect and the implementations of the first aspect. Optionally, the communication apparatus further includes a memory, and the memory is configured to store the computer program.

According to a fourth aspect, an embodiment of this application provides a communication apparatus. The communication apparatus is configured to perform any one of the second aspect and the implementations of the second aspect. Specifically, the communication apparatus includes a processor. The processor is configured to invoke and run a computer program, to enable the communication apparatus to perform any one of the second aspect and the implementations of the second aspect. Optionally, the communication apparatus further includes a memory, and the memory is configured to store the computer program.

According to a fifth aspect, an embodiment of this application provides a communication apparatus. The communication apparatus is configured to perform the method provided in any one of the first aspect and the implementations of the first aspect. Specifically, the communication apparatus may include a unit and/or a module (for example, a processing unit and a transceiver unit) configured to perform the method provided in any one of the first aspect and the implementations of the first aspect.

In an implementation, the communication apparatus may be a terminal device. The transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in a device. In this case, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a sixth aspect, an embodiment of this application provides a communication apparatus. The communication apparatus is configured to perform the method provided in any one of the second aspect and the implementations of the second aspect. Specifically, the communication apparatus may include a unit and/or a module (for example, a processing unit and a transceiver unit) configured to perform the method provided in any one of the second aspect and the implementations of the second aspect.

In an implementation, the communication apparatus may be a terminal device or a network device. The transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in a device. In this case, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a seventh aspect, an embodiment of this application provides a processor, configured to perform the method provided in at least one of the first aspect and the second aspect.

Operations such as sending and obtaining/receiving related to the processor may be understood as operations such as outputting and receiving or inputting of the processor, or may be understood as sending and receiving operations performed by a radio frequency circuit and an antenna, unless otherwise specified, or provided that the operations do not contradict actual functions or internal logic of the operations in related descriptions. This is not limited in this application.

According to an eighth aspect, an embodiment of this application provides a computer program product including instructions. When the computer program product runs on a computer, the computer is enabled to perform the method provided in at least one of the first aspect and the second aspect and any implementation in each aspect.

According to a ninth aspect, an embodiment of this application provides a communication system, including the first communication device in the third aspect and the second communication device in the fourth aspect.

According to a tenth aspect, a chip is provided. The chip includes a processor and a communication interface, and the processor reads instructions via the communication interface, to perform the method provided in at least one of the first aspect and the second aspect and any implementation in each aspect.

Optionally, in an implementation, the chip further includes a memory. The memory stores a computer program or the instructions. The processor is configured to execute the computer program or the instructions stored in the memory. When the computer program or the instructions are executed, the processor is configured to perform the method provided in at least one of the first aspect and the second aspect and any implementation in each aspect.

According to an eleventh aspect, an embodiment of this application provides a computer-readable storage medium. The computer-readable storage medium stores a computer program. When the computer program is run on a communication apparatus, the communication apparatus is enabled to perform the method in at least one of the first aspect and the second aspect and any implementation in each aspect.

For technical effects of the second aspect to the eleventh aspect, refer to the technical effects of the first aspect. Details are not described herein again.

### BRIEF DESCRIPTION OF DRAWINGS

FIG. 1 is a diagram of a communication system 10 applicable to an embodiment of this application;
FIG. 2 is a diagram of a structure of a communication system 20 applicable to an embodiment of this application;
FIG. 3 is a diagram of a time-frequency resource applicable to an embodiment of this application;
FIG. 4 is a diagram of a frequency-hopping scheme according to an embodiment of this application;
FIG. 5 is a schematic flowchart of a first communication method 500 according to an embodiment of this application;
FIG. 6 is a diagram of estimating a phase error by using an overlapping frequency domain resource;
FIG. 7 is a diagram of different frequency ranges included in two adjacent time windows according to an embodiment of this application;
FIG. 8 is a diagram of a first periodic frequency hopping pattern according to an embodiment of this application;
FIG. 9 is a diagram of a second periodic frequency hopping pattern according to an embodiment of this application;
FIG. 10 is a diagram of a third periodic frequency hopping pattern according to an embodiment of this application;
FIG. 11 is a diagram of a fourth periodic frequency hopping pattern according to an embodiment of this application;
FIG. 12 is a diagram of a fifth periodic frequency hopping pattern according to an embodiment of this application;
FIG. 13 is a diagram of a sixth periodic frequency hopping pattern according to an embodiment of this application;
FIG. 14 is a diagram of a seventh periodic frequency hopping pattern according to an embodiment of this application;
FIG. 15 is a schematic flowchart of a second communication method 1500 according to an embodiment of this application;
FIG. 16 is a block diagram of a communication apparatus 1600 according to an embodiment of this application; and
FIG. 17 is a diagram of another possible structure of a communication apparatus according to an embodiment of this application.

### DESCRIPTION OF EMBODIMENTS

The following describes technical solutions of this application with reference to accompanying drawings.

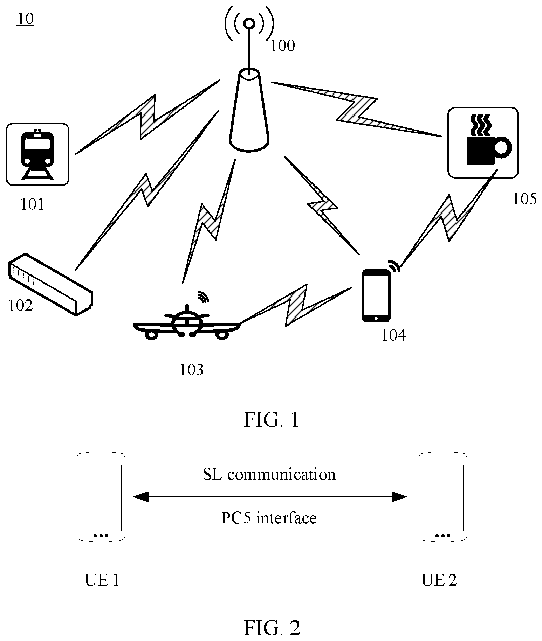

FIG. 1 is a diagram of a communication system 10 applicable to an embodiment of this application. As shown in FIG. 1, the communication system in this embodiment of this application may include a network device 100 and at least one terminal device (for example, 101 to 105 in FIG. 1). The network device may include one or more antennas. In addition, the network device may additionally include a transmitter chain and a receiver chain. A person of ordinary skill in the art may understand that the transmitter chain and the receiver chain may include a plurality of components (for example, a processor, a modulator, a multiplexer, a demodulator, a demultiplexer, or an antenna) related to signal sending and receiving. FIG. 1 is merely a simplified diagram of an example. In addition, the communication system may further include another communication device that is not shown in FIG. 1.

The foregoing communication system architecture 10 used in this embodiment of this application is merely an example for description, and communication system architectures applicable to embodiments of this application are not limited thereto. For example, any communication system architecture that can implement functions of the foregoing devices is applicable to embodiments of this application.

FIG. 2 is a diagram of a structure of a communication system 20 applicable to an embodiment of this application. In the wireless communication system shown in FIG. 2, terminal devices may directly communicate with each other without a network device. An interface between the terminal devices is referred to as a PC5 interface, and is similar to a Uu interface between a terminal device and a base station. A link between the terminal devices is referred to as a sidelink (sidelink, SL). A typical application scenario of SL communication is V2X. In V2X, each vehicle is a terminal device, and data transmission may be directly performed between terminal devices over an SL without a network, which can effectively reduce a communication latency.

The solutions of this application may be applied to integrated communication and sensing scenarios, sensing scenarios, or positioning scenarios, for example, bistatic integrated communication and sensing scenarios (or sensing scenarios or positioning scenarios) in which a terminal device performs sending and a network device performs receiving in FIG. 1, or may be applied to bistatic integrated communication and sensing scenarios (or sensing scenarios or positioning scenarios) among a plurality of terminal devices in FIG. 2, or may be applied to monostatic communication and sensing scenarios of a single terminal device or the like. A signal used for sensing may be a specific reference signal, or sensing may be performed by using a communication signal. This is not limited in this application.

The technical solutions provided in this application may be applied to various communication systems, for example, a 5th-generation (5th-generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may also be applied to a future communication system.

The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), and internet-of-things (internet-of-things, IoT) communication systems, or other communication systems.

For example, V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication. V2V refers to communication between vehicles. V2P refers to communication between a vehicle and a person (including a pedestrian, a bicyclist, a driver, a passenger, or the like). V2I refers to communication between a vehicle and infrastructure. The infrastructure is, for example, a road side unit (road side unit, RSU) or a network device. The RSU includes two types: an RSU of a terminal type and an RSU of a base station type. The RSU of the terminal type is deployed on a road side, and therefore is in a non-mobile state, for which mobility does not need to be considered. The RSU of the base station type may provide timing synchronization and resource scheduling for a vehicle that communicates with the RSU of the base station type. V2N refers to communication between a vehicle and a network device. It may be understood that the foregoing descriptions are example descriptions, and constitute no limitation in embodiments of this application. For example, V2X may further include V2X communication based on an NR system in current 3GPP Rel-16 and later releases.

For example, D2D communication may include communication between a programmable logic controller (programmable logic controller, PLC) and a subordinate device of the programmable logic controller, for example, communication between the PLC and a sensor, or communication between the PLC and an actuator. The sensor may be, for example, a pressure sensor or a temperature sensor. The actuator may be, for example, a valve terminal or a heater. For example, the PLC receives, in each period, data measured by all sensors, and sends an execution instruction to the actuator in each period.

The terminal device in embodiments of this application may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may be a device that provides voice/data for a user, for example, a handheld device having a wireless connection function or an in-vehicle device. Currently, some examples of the terminal are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a wearable device, a terminal device in a 5G network, a terminal device in a future evolved public land mobile network (public land mobile network, PLMN), or the like. This is not limited in embodiments of this application.

For example rather than limitation, in embodiments of this application, the terminal device may alternatively be a wearable device. The wearable device may also be referred to as a wearable intelligent device, and is a general term for devices that can be worn and that are developed by intelligently designing everyday wearing by applying a wearable technology, such as glasses, gloves, watches, clothing, and shoes. The wearable device is a portable device that can be directly worn on the body or integrated onto user clothes or accessories. The wearable device is not only a hardware device, but also implements a powerful function through software support, data exchange, and cloud interaction. In a broad sense, the wearable intelligent device includes full-featured and large-sized devices that can implement all or a part of functions without depending on smartphones, for example, smart watches or smart glasses, and includes devices that focus on a specific type of application function and need to collaboratively work with other devices such as smartphones, for example, various smart bands or smart jewelry for monitoring physical signs.

In embodiments of this application, an apparatus configured to implement a function of the terminal device may be the terminal device, or may be an apparatus that can support the terminal device in implementing the function, for example, a chip system or a chip. The apparatus may be installed in the terminal device. In embodiments of this application, the chip system may include a chip, or may include a chip and another discrete component.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following names in a broad sense, or may be replaced with the following names: a NodeB (NodeB), an evolved NodeB (evolved NodeB, eNB), a next-generation NodeB (next-generation NodeB, gNB), a relay station, an access point, a transmitting and receiving point (transmitting and receiving point, TRP), a transmitting point (transmitting point, TP), a primary station, a secondary station, a motor slide retainer (motor slide retainer, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip disposed in the foregoing device or apparatus. For example, the RAN node may be a CU, a DU, a central unit control plane (central unit-control plane, CU-CP), a central unit user plane (central unit-user plane, CU-UP), or an RU. The CU and the DU may be separately disposed, or may be included in a same network element, for example, a BBU. The RU may be included in a radio frequency device or a radio frequency unit, for example, included in an RRU, an AAU, or an RRH. In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit. In different systems, the CU (or the CU-CP and the CU-UP), the DU, or the RU may have different names, but a person skilled in the art may understand their meanings. For example, the radio access network may alternatively be an open radio access network (open radio access network, O-RAN) architecture. In the ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module. The base station may alternatively be a mobile switching center, a device that bears a base station function in D2D, V2X, or M2M communication, a network-side device in a future communication network, a device that bears a base station function in a future communication system, or the like. The base station may support networks using a same access technology or different access technologies. A specific technology and a specific device form that are used for the network device are not limited in embodiments of this application.

The base station may be fixed or mobile. For example, a helicopter or an uncrewed aerial vehicle may be configured as a mobile base station, and one or more cells may move based on a position of the mobile base station. In another example, the helicopter or the uncrewed aerial vehicle may be configured as a device for communicating with another base station.

In embodiments of this application, an apparatus configured to implement a function of the network device may be the network device, or may be an apparatus that can support the network device in implementing the function, for example, a chip system or a chip. The apparatus may be installed in the network device. In embodiments of this application, the chip system may include a chip, or may include a chip and another discrete component.

The network device and the terminal device may be deployed on land, including indoor or outdoor devices, handheld devices, or in-vehicle devices; or may be deployed on a water surface; or may be deployed on airplanes, balloons, and satellites in air. A scenario in which the network device and the terminal device are located is not limited in embodiments of this application.

For ease of understanding embodiments of this application, terms or technologies in this application are briefly described first.

### 1. Time domain resource and frequency domain resource

A network device and a terminal device may sense each other by using a time-frequency resource. In embodiments of this application, the time domain resource is, for example, a subframe (subframe), a frame, a half subframe, a half frame, a slot (slot), a sub-slot (sub-slot), a mini-slot (mini-slot), a partial slot (partial slot), an orthogonal frequency division multiplexing (orthogonal frequency division multiplexing, OFDM) symbol (symbol), or a single carrier frequency division multiple access (single carrier frequency division multiple access, SC-FDMA) symbol.

The frequency domain resource may be replaced with a frequency resource (frequency resource), indicating a resource used to carry frequency domain data. The frequency domain resource may be a resource element (resource element, RE), a resource block (resource block, RB), a sub-channel (sub-channel), a resource pool (resource pool), a resource block set (RB set), a bandwidth (bandwidth), a bandwidth part (bandwidth part (BWP)), a carrier (carrier), a channel (channel), an interlace (interlace) RB, or an interlace RE, or a comb, or the like.

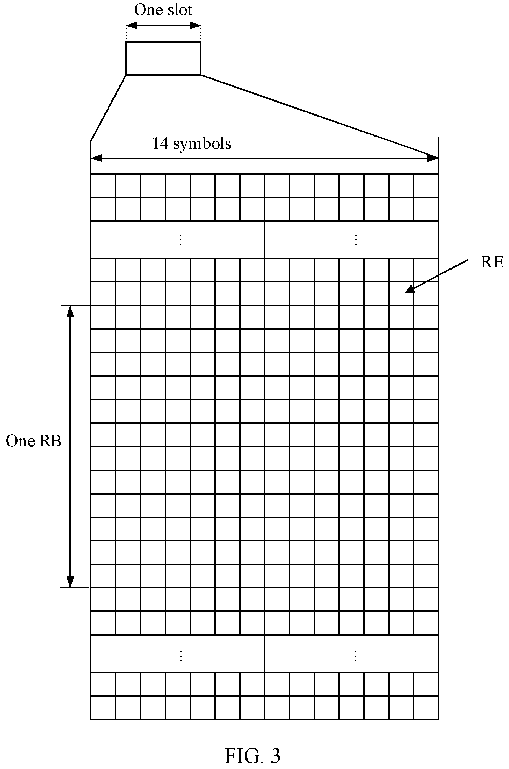

FIG. 3 is a diagram of a time-frequency resource applicable to an embodiment of this application. For example, a time domain resource is a slot, and a frequency domain resource is an RB. One slot may include 14 time domain symbols, and one RB may include 12 subcarriers. One RE may be considered as a minimum resource unit used for data transmission. In other words, one RE is a minimum resource unit used for resource mapping of to-be-sent data. As shown in FIG. 3, one RE corresponds to one symbol in time domain, for example, an OFDM symbol or a discrete Fourier transform spread orthogonal frequency division multiplexing (discrete fourier transform spread orthogonal frequency division multiplexing, DFT-s-OFDM) symbol. One RE corresponds to one subcarrier in frequency domain, and one RE may be used to map one complex symbol, for example, a complex symbol obtained through modulation or a complex symbol obtained through precoding. This is not limited in this application. It should be understood that FIG. 3 is merely an example of a possible time-frequency resource provided for ease of understanding. A specific form of the time-frequency resource is not limited in this application.

### 2. Frequency hopping (frequency hopping, FH)

In a sensing scenario, a device sends, on several time domain resources, sensing signals with different center frequencies but in a continuous spectrum.

### 3. Frequency hopping pattern (frequency hopping pattern)

A set of time-frequency resources corresponding to different moments may be referred to as a frequency hopping pattern. In the frequency hopping pattern, different time domain resources may correspond to different frequency domain resources. The frequency hopping pattern may also be referred to as a frequency hopping design.

The foregoing briefly describes terms in this application, which are not described in detail again in the following embodiments. In addition, the foregoing term descriptions are merely descriptions for ease of understanding, and do not limit the protection scope of embodiments of this application.

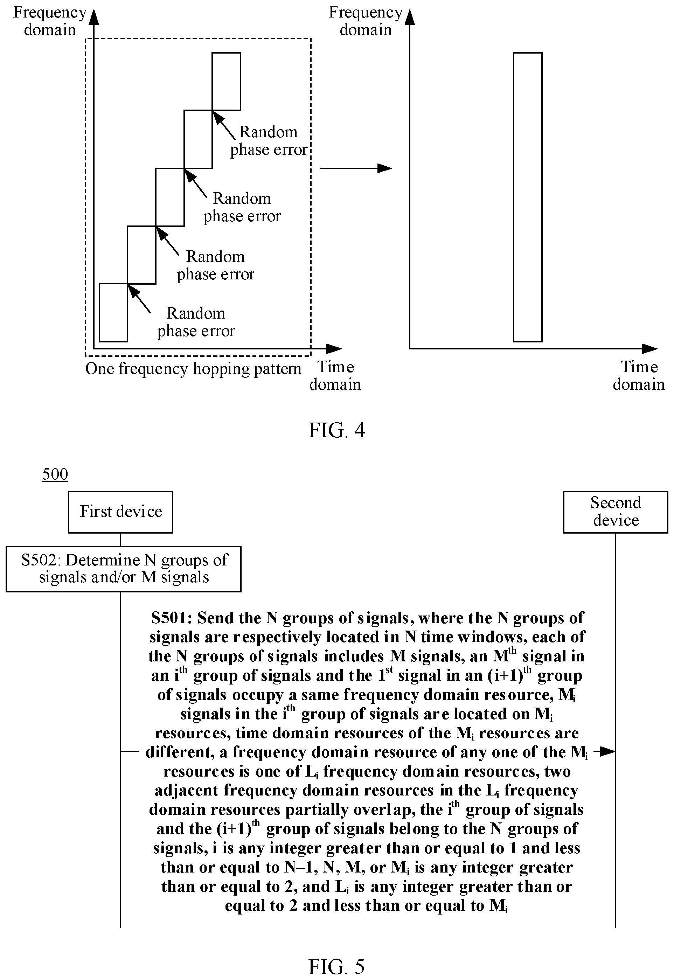

In a sensing scenario, a distance and a velocity of a target may be measured by periodically sending a reference signal within a specific bandwidth. For example, to achieve a ranging resolution of 0.3 m, a bandwidth of a sensing signal needs to be at least 500 MHz, which imposes a very high requirement on a sampling rate of an analog-to-digital converter (analog-to-digital converter, ADC) of a UE (to be specific, to avoid loss of ranging precision, the sampling rate of the ADC of the UE also needs to reach at least 500 MHz). It is difficult for a RedCap device to achieve a high ranging resolution due to a limited signal bandwidth for sending. Therefore, to lower the requirement on the sampling rate of the ADC of the UE and support the RedCap device in achieving a high ranging resolution, in a current solution, reference signals are sent in a frequency-hopping scheme to perform ranging, as shown in FIG. 4. In the frequency-hopping scheme, a signal bandwidth in a single symbol is small. Therefore, this solution has a low requirement on the sampling rate of the ADC of the UE, and adapts to a signal sending capability of the RedCap device. In addition, in the frequency-hopping scheme, because signals on a plurality of time domain resources are in a continuous spectrum, and a channel may be considered basically unchanged in a plurality of time-frequency resources used to complete one frequency hopping pattern, these signals may be jointly processed as an equivalent large-bandwidth signal to implement ranging.

However, during each frequency hopping in a frequency hopping pattern, for various frequency-sensitive devices such as a phase locked loop (phase locked loop, PLL), a low noise amplifier (low noise amplifier, LNA), and a power amplifier (power amplifier, PA), a random phase error is caused between adjacent frequency domain resources, and the random error degrades ranging performance. When reference signals need to be periodically sent through frequency hopping (that is, when the frequency hopping pattern in FIG. 4 periodically appears), a random phase error is also caused between adjacent periodicities in a plurality of frequency hopping periodicities, and degrades velocity measurement performance.

In view of this, this application provides a communication method and apparatus, to avoid random phase errors caused by frequency hopping between adjacent periodicities in a plurality of frequency hopping periodicities. When the communication method and apparatus are used in a sensing scenario, performance of a sensing system can be improved.

FIG. 5 is a schematic flowchart of a first communication method 500 according to an embodiment of this application. As shown in FIG. 5, the schematic flowchart is shown by using interaction between a first device and a second device as an example. Steps performed by the first device and/or the second device may be performed by a module or a unit in the first device and/or the second device, for example, performed by a chip in the first device and/or the second device.

It should be noted that when the method provided in this application is applied to a sensing scenario, N groups of signals or M signals are sensing signals, for example, used for ranging, positioning, or velocity measurement. The sensing signal may be a sensing reference signal, a positioning reference signal, a communication signal used for sensing, or the like. This is not limited in this application. It may be understood that, when the method provided in this application is applied to a bistatic sensing scenario, the first device is different from the second device. For example, the first device may be a terminal device, and the second device may be a network device. Alternatively, the first device and the second device are different terminal devices. When the method provided in this application is applied to a monostatic sensing scenario, the first device and the second device are the same, for example, may be a same terminal device.

Specifically, the method includes the following steps.

S501: The first device sends the N groups of signals to the second device.

Specifically, the first device sends the N groups of signals to the second device, and correspondingly, the second device receives the N groups of signals. The N groups of signals are respectively located in N time windows, and each of the N groups of signals includes M signals. An M^{th} signal in an i^{th} group of signals and the 1^{st} signal in an (i+1)^{th} group of signals occupy a same frequency domain resource, Mᵢ signals in the i^{th} group of signals are located on Mᵢ resources, time domain resources of the Mᵢ resources are different, a frequency domain resource of any one of the Mᵢ resources is one of Lᵢ frequency domain resources, and two adjacent frequency domain resources in the Lᵢ frequency domain resources partially overlap. The N groups of signals include the i^{th} group of signals and the (i+1)^{th} group of signals. In other words, the i^{th} group of signals and the (i+1)^{th} group of signals belong to two adjacent groups of signals in the N groups of signals. i is any integer greater than or equal to 1 and less than or equal to N-1. For example, i may be equal to 1, 2, 3, or the like. N, M, or Mi is any integer greater than or equal to 2. For example, N may be equal to 2, 3, 4, 5, or the like, and M or Mᵢ may be equal to 2, 3, 4, 5, or the like. Lᵢ is any integer greater than or equal to 2 and less than or equal to Mᵢ. For example, Lᵢ may be equal to 2, 3, ..., or Mᵢ.

It may be understood that the i^{th} group of signals and the (i+1)^{th} group of signals are two adjacent groups of signals. Similarly, Mᵢ₊₁ signals in the (i+1)^{th} group of signals are located on Mᵢ₊₁ resources, time domain resources of the Mᵢ₊₁ resources are different, a frequency domain resource of any one of the Mᵢ₊₁ resources is one of Lᵢ₊₁ frequency domain resources, and two adjacent frequency domain resources in the Lᵢ₊₁ frequency domain resources partially overlap. Lᵢ₊₁ is any integer greater than or equal to 2 and less than or equal to Mᵢ₊₁. For example, Lᵢ₊₁ may be equal to 2, 3, ..., or Mᵢ.

It should be noted that, in descriptions of this application, a subscript of a letter is used to represent a corresponding group in the N groups of signals. For example, the Mᵢ resources are M resources of the i^{th} group of signals, and the Mᵢ₊₁ resources are M resources of the (i+1)^{th} group of signals. For another example, the Lᵢ frequency domain resources are L resources of the i^{th} group of signals, and the Lᵢ₊₁ frequency domain resources are L resources of the (i+1)^{th} group of signals.

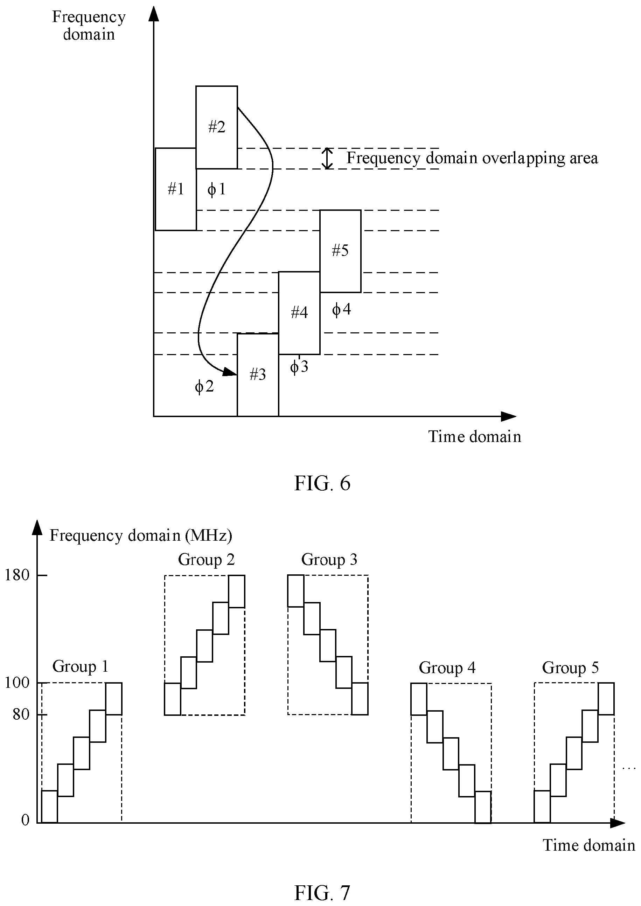

It should be further noted that, in the N groups of signals sent by the first device, because a frequency domain resource of the last resource in a current time window is the same as a frequency domain resource of the 1^{st} resource in a subsequent time window in adjacent time windows, the first device may not need to perform frequency hopping when sending the last signal in the current time window and the 1^{st} signal in the subsequent time window, thereby avoiding an additional random phase error caused by frequency hopping between the adjacent time windows (for details, refer to the following example descriptions in FIG. 7 to FIG. 14). In addition, in each time window, any two adjacent frequency domain resources in a plurality of frequency domain resources partially overlap, so that random phase errors caused by frequency hopping in each time window can be easily estimated. For example:

In a time window shown in FIG. 6, the first device sequentially sends signals on frequency domain resources #1, #2, #3, #4, and #3 in a time domain sequence. The frequency domain resource #1 and the frequency domain resource #2 are adjacent frequency domain resources, the frequency domain resource #1 and the frequency domain resource #5 are adjacent frequency domain resources, the frequency domain resource #3 and the frequency domain resource #4 are adjacent frequency domain resources, and the frequency domain resource #4 and the frequency domain resource #5 are adjacent frequency domain resources. A random phase error ϕ₁ between the frequency domain resource #1 and the frequency domain resource #2 may be estimated and compensated for by using an overlapping area between the frequency domain resource #1 and the frequency domain resource #2. A random phase error ϕ₃ between the frequency domain resource #3 and the frequency domain resource #4 may be compensated for by using an overlapping area between the frequency domain resource #3 and the frequency domain resource #4. A random phase error ϕ₄ between the frequency domain resource #4 and the frequency domain resource #5 may be compensated for by using an overlapping area between the frequency domain resource #4 and the frequency domain resource #5. After the phase errors between the frequency domain resources are compensated for, a random phase error ϕ₂ between the frequency domain resource #2 and the frequency domain resource #3 may be further compensated for indirectly by using an overlapping area between the frequency domain resource #1 and the frequency domain resource #5, so that all random phase errors in the time window can be compensated for. It may be understood that the foregoing process of compensating, in a time window, for random phase errors caused by frequency hopping is merely an example for description, and a specific processing method is not limited in this application.

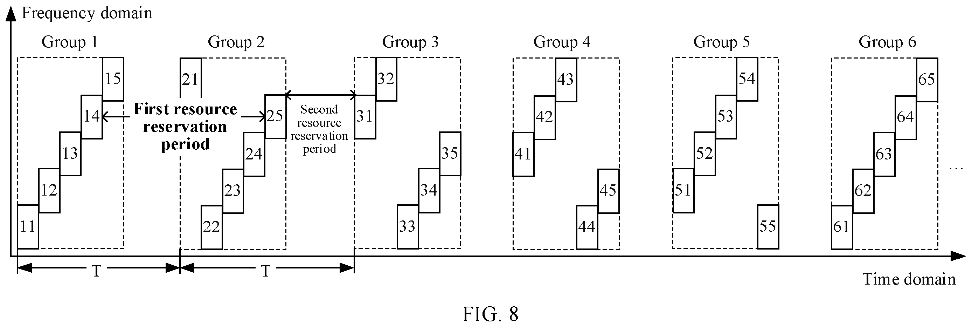

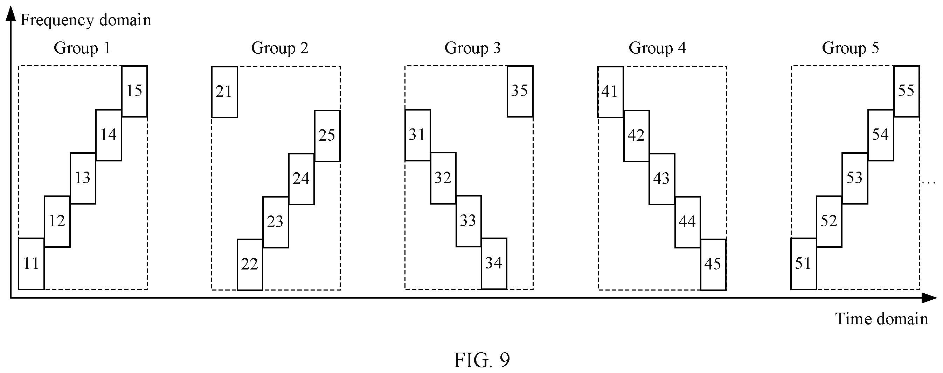

Optionally, the N time windows occupy a same time length. In descriptions of this embodiment of this application, an example in which the N time windows occupies a same time length is used for description. For example, the following FIG. 7 to FIG. 14 each show eight different N groups of signals. In addition, it may be understood that in FIG. 7 to FIG. 14, each N groups of signals are not completely shown, but only a part of groups are shown. For example, in FIG. 8, only six of the N groups are shown, and in FIG. 9, only five of the N groups are shown.

A time length occupied by each time window may be a time interval between a start moment of a current time window and a start moment of a subsequent time window, a time interval between an end moment of the current time window and an end moment of the subsequent time window, or a time interval between an intermediate moment of the current time window and an intermediate moment of the subsequent time window. This is not limited in this application.

The N time windows may also be understood as N periodicities, and the time length occupied by each time window may also be understood as a period length.

Optionally, that the M^{th} signal in the i^{th} group of signals and the 1^{st} signal in the (i+1)^{th} group of signals occupy the same frequency domain resource may mean that the M^{th} signal in the i^{th} group of signals and the 1^{st} signal in the (i+1)^{th} group of signals are located within a same frequency range. For example, the M^{th} signal in the i^{th} group of signals and the 1^{st} signal in the (i+1)^{th} group of signals may respectively occupy different combs of a same resource block set.

Optionally, before the first device sends the N groups of signals to the second device, the method 500 further includes S502.

S502: The first device determines the N groups of signals and/or the M signals.

Specifically, when each of the N groups of signals includes the M signals, the first device may determine only the M signals or the N groups of signals. It may be understood that in some embodiments, the first device may alternatively determine a plurality of groups of signals in the N groups of signals that are less than N groups. This is not limited in this application. In some embodiments, for the Mᵢ resources of the i^{th} group and the Mᵢ₊₁ resources of the (i+1)^{th} group, the Lᵢ frequency domain resources of the Mᵢ resources are different from the Lᵢ₊₁ frequency domain resources of the Mᵢ₊₁ resources. In this case, frequency ranges included in two adjacent time windows overlap. For example, as shown in FIG. 7, frequency ranges of five resources in a group 1 and five resources in a group 2 are different. When the frequency range of the five frequency domain resources in the group 1 is 0 MHz to 100 MHz, the frequency range of the five frequency domain resources in the group 2 may be 80 MHz to 180 MHz. In some embodiments, for the Mᵢ resources of the i^{th} group and the Mᵢ₊₁ resources of the (i+1)^{th} group, the Lᵢ frequency domain resources of the Mᵢ resources are the same as the Lᵢ₊₁ frequency domain resources of the Mᵢ₊₁ resources. For example, in FIG. 7, frequency ranges of the five resources in the group 2 and five resources in a group 3 are 80 MHz to 180 MHz, and frequency ranges of five resources in a group 4 and five resources in a group 5 are 0 MHz to 100 MHz. In other words, a frequency range corresponding to each group of M frequency domain resources in N groups is not limited in this application, and frequency ranges may be the same or different. The frequency range in the foregoing example may be considered as a relative frequency range for a carrier frequency, rather than an absolute frequency range. For ease of illustration, in the following specific embodiments and accompanying drawings, an example in which the N groups of frequency resources are the same is used for description.

In some embodiments, a frequency domain resource of an m^{th} resource in the Mᵢ resources is different from a frequency domain resource of an m^{th} resource in the Mᵢ₊₁ resources. In some other embodiments, the frequency domain resource of the m^{th} resource in the Mᵢ resources is the same as the frequency domain resource of the m^{th} resource in the Mᵢ₊₁ resources. m is any integer greater than or equal to 1 and less than or equal to M. For example, m may be equal to 1, 2, ..., or M.

The following separately describes in detail the case in which the frequency domain resource of the m^{th} resource in the Mᵢ resources is different from the frequency domain resource of the m^{th} resource in the Mᵢ₊₁ resources and the case in which the frequency domain resource of the m^{th} resource in the Mᵢ resources is the same as the frequency domain resource of the m^{th} resource in the Mᵢ₊₁ resources.

Specifically, when the frequency domain resource of the m^{th} resource in the Mᵢ resources is different from the frequency domain resource of the m^{th} resource in the Mᵢ₊₁ resources, optionally, a quantity of frequency resources occupied by the M signals is the same as a quantity of time domain resources occupied by the M signals. The following uses an example in which the quantity of frequency resources occupied by the M signals is the same as the quantity of time domain resources occupied by the M signals for description.

In some embodiments, a frequency domain resource of the 1^{st} resource in the Mᵢ resources is a frequency domain resource with a lowest frequency, and a frequency domain resource of the 1^{st} resource in the Mᵢ₊₁ resources is a frequency domain resource with a highest frequency. For example, a start physical resource block (physical resource block, PRB) of the frequency domain resource of the 1^{st} resource in the Mᵢ resources corresponds to a lowest frequency position in all frequency domain resources, and an end PRB of the frequency domain resource of the 1^{st} resource in the Mᵢ₊₁ resources corresponds to a highest frequency position in all frequency domain resources. In a possible implementation, a frequency of a frequency domain resource of an x^{th} resource in the Mᵢ resources or the Mᵢ₊₁ resources is lower than a frequency of a frequency domain resource of an (x+1)^{th} resource, and x is any integer greater than or equal to 1 and less than or equal to M-1. Alternatively, in another possible implementation, a frequency domain resource of a y^{th} resource in the Mᵢ resources or the Mᵢ₊₁ resources is a frequency domain resource with a highest frequency, a frequency domain resource of a (y+1)^{th} resource is a frequency domain resource with a lowest frequency, and y is an integer greater than or equal to 1 and less than or equal to M-1.

For example, for a group 1 and a group 2 in FIG. 8, frequency domain resources of a resource 11 in the group 1 and a resource 21 in the group 2 are different. In other words, frequency domain resources of the 1^{st} resource in the group 1 and the 1^{st} resource in the group 2 are different. The following is similar thereto, and details are not described again. Frequency domain resources of a resource 12 in the group 1 and a resource 22 in the group 2 are different, frequency domain resources of a resource 13 in the group 1 and a resource 23 in the group 2 are different, frequency domain resources of a resource 14 in the group 1 and a resource 24 in the group 2 are different, and frequency domain resources of a resource 15 in the group 1 and a resource 25 in the group 2 are different. In addition, the frequency domain resource of the resource 11 in the group 1 is a frequency domain resource with a lowest frequency, and the frequency domain resource of the resource 21 in the group 2 is a frequency domain resource with a highest frequency. For the group 1, a frequency of a frequency domain resource of a previous resource in the group 1 is lower than a frequency of a frequency domain resource of a subsequent resource. To be specific, the frequency of the frequency resource of the resource 11 is lower than a frequency of the frequency resource of the resource 12, the frequency of the frequency resource of the resource 12 is lower than a frequency of the frequency resource of the resource 13, the frequency of the frequency resource 13 is lower than a frequency of the frequency resource 14, and the frequency of the frequency resource 14 is lower than a frequency of the frequency resource of the resource 15. For the group 2, in the five resources included in the group 2, there are two adjacent resources in which a frequency domain resource of a previous resource is a frequency domain resource with a highest frequency, and a frequency domain resource of a subsequent resource is a frequency domain resource with a lowest frequency. To be specific, the frequency domain resource of the resource 21 is the frequency domain resource with the highest frequency, and the frequency domain resource of the resource 22 is the frequency domain resource with the lowest frequency.

For example, for a group 1 and a group 2 in FIG. 9, frequency domain resources of a resource 11 in the group 1 and a resource 21 in the group 2 are different. In other words, frequency domain resources of the 1^{st} resource in the group 1 and the 1^{st} resource in the group 2 are different. The following is similar thereto, and details are not described again. Frequency domain resources of a resource 12 in the group 1 and a resource 22 in the group 2 are different, frequency domain resources of a resource 13 in the group 1 and a resource 23 in the group 2 are different, frequency domain resources of a resource 14 in the group 1 and a resource 24 in the group 2 are different, and frequency domain resources of a resource 15 in the group 1 and a resource 25 in the group 2 are different. In addition, the frequency domain resource of the resource 11 in the group 1 is a frequency domain resource with a lowest frequency, and the frequency domain resource of the resource 21 in the group 2 is a frequency domain resource with a highest frequency. For the group 1, a frequency of a frequency domain resource of a previous resource in the group 1 is lower than a frequency of a frequency domain resource of a subsequent resource. To be specific, the frequency of the frequency resource of the resource 11 is lower than a frequency of the frequency resource of the resource 12, the frequency of the frequency resource of the resource 12 is lower than a frequency of the frequency resource of the resource 13, the frequency of the frequency resource 13 is lower than a frequency of the frequency resource 14, and the frequency of the frequency resource 14 is lower than a frequency of the frequency resource of the resource 15. For the group 2, in the five resources included in the group 2, there are two adjacent resources in which a frequency domain resource of a previous resource is a frequency domain resource with a highest frequency, and a frequency domain resource of a subsequent resource is a frequency domain resource with a lowest frequency. To be specific, the frequency domain resource of the resource 21 is the frequency domain resource with the highest frequency, and the frequency domain resource of the resource 22 is the frequency domain resource with the lowest frequency.

Specifically, when the frequency domain resource of the m^{th} resource in the Mᵢ resources is different from the frequency domain resource of the m^{th} resource in the Mᵢ₊₁ resources, optionally, the quantity of frequency resources occupied by the M signals is the same as the quantity of time domain resources occupied by the M signals. The following uses an example in which the quantity of frequency resources occupied by the M signals is the same as the quantity of time domain resources occupied by the M signals for description.

In some other embodiments, the frequency of the frequency domain resource of the 1^{st} resource in the Mᵢ resources is higher than the frequency of the frequency domain resource of the 1^{st} resource in the Mᵢ₊₁ resources. For example, a start PRB index of the frequency domain resource of the 1^{st} resource in the Mᵢ resources is n_{prb}, and a start PRB index of the frequency domain resource of the 1^{st} resource in the Mᵢ₊₁ resources is n_{prb}-Bₕₒₚ+Bₒᵥₑᵣₗₐₚ. Bₕₒₚ represents a frequency hopping bandwidth, for example, 48 RBs. Bₒᵥₑᵣₗₐₚ represents an overlapping bandwidth between two adjacent frequency domain resources, for example, 1, 2, or 4 RBs. In a possible implementation, a frequency of a frequency domain resource of an x^{th} resource in the Mᵢ resources or the Mᵢ₊₁ resources is lower than a frequency of a frequency domain resource of an (x+1)^{th} resource, and x is any integer greater than or equal to 1 and less than or equal to M-1. Alternatively, in another possible implementation, a frequency domain resource of a y^{th} resource in the Mᵢ resources or the Mᵢ₊₁ resources is a frequency domain resource with a highest frequency, a frequency domain resource of a (y+1)^{th} resource is a frequency domain resource with a lowest frequency, and y is an integer greater than or equal to 1 and less than or equal to M-1.

For example, for the group 2 and a group 3 in FIG. 8, frequency domain resources of the resource 21 in the group 2 and a resource 31 in the group 3 are different. In other words, frequency domain resources of the 1^{st} resource in the group 2 and the 1^{st} resource in the group 3 are different. The following is similar thereto, and details are not described again. Frequency domain resources of the resource 22 in the group 2 and a resource 32 in the group 3 are different, frequency domain resources of the resource 23 in the group 2 and a resource 33 in the group 3 are different, frequency domain resources of the resource 24 in the group 2 and a resource 34 in the group 3 are different, and frequency domain resources of the resource 25 in the group 2 and a resource 35 in the group 3 are different. In addition, the frequency of the frequency domain resource of the resource 21 is higher than a frequency of the frequency domain resource of the resource 31. For the group 2, in the five resources included in the group 2, there are two adjacent resources in which a frequency domain resource of a previous resource is a frequency domain resource with a highest frequency, and a frequency domain resource of a subsequent resource is a frequency domain resource with a lowest frequency. To be specific, the frequency domain resource of the resource 21 is the frequency domain resource with the highest frequency, and the frequency domain resource of the resource 22 is the frequency domain resource with the lowest frequency. For the group 3, in the five resources included in the group 3, there are two adjacent resources in which a frequency domain resource of a previous resource is a frequency domain resource with a highest frequency, and a frequency domain resource of a subsequent resource is a frequency domain resource with a lowest frequency. To be specific, the frequency domain resource of the resource 32 is the frequency domain resource with the highest frequency, and the frequency domain resource of the resource 33 is the frequency domain resource with the lowest frequency.

For example, for the group 3 and a group 4 in FIG. 8, frequency domain resources of the resource 31 in the group 3 and a resource 41 in the group 4 are different. In other words, frequency domain resources of the 1^{st} resource in the group 3 and the 1^{st} resource in the group 4 are different. The following is similar thereto, and details are not described again. Frequency domain resources of the resource 32 in the group 3 and a resource 42 in the group 4 are different, frequency domain resources of the resource 33 in the group 3 and a resource 43 in the group 4 are different, frequency domain resources of the resource 34 in the group 3 and a resource 44 in the group 4 are different, and frequency domain resources of the resource 35 in the group 3 and a resource 45 in the group 4 are different. In addition, the frequency of the frequency domain resource of the resource 31 is higher than a frequency of the frequency domain resource of the resource 41. For the group 3, in the five resources included in the group 3, there are two adjacent resources in which a frequency domain resource of a previous resource is a frequency domain resource with a highest frequency, and a frequency domain resource of a subsequent resource is a frequency domain resource with a lowest frequency. To be specific, the frequency domain resource of the resource 32 is the frequency domain resource with the highest frequency, and the frequency domain resource of the resource 33 is the frequency domain resource with the lowest frequency. For the group 4, in the five resources included in the group 4, there are two adjacent resources in which a frequency domain resource of a previous resource is a frequency domain resource with a highest frequency, and a frequency domain resource of a subsequent resource is a frequency domain resource with a lowest frequency. To be specific, the frequency domain resource of the resource 43 is the frequency domain resource with the highest frequency, and the frequency domain resource of the resource 44 is the frequency domain resource with the lowest frequency.

For example, for the group 4 and a group 5 in FIG. 8, frequency domain resources of the resource 41 in the group 4 and a resource 51 in the group 5 are different. In other words, frequency domain resources of the 1^{st} resource in the group 4 and the 1^{st} resource in the group 5 are different. The following is similar thereto, and details are not described again. Frequency domain resources of the resource 42 in the group 4 and a resource 52 in the group 5 are different, frequency domain resources of the resource 43 in the group 4 and a resource 53 in the group 5 are different, frequency domain resources of the resource 44 in the group 4 and a resource 54 in the group 5 are different, and frequency domain resources of the resource 45 in the group 4 and a resource 55 in the group 5 are different. In addition, the frequency of the frequency domain resource of the resource 41 is higher than a frequency of the frequency domain resource of the resource 51. For the group 4, in the five resources included in the group 4, there are two adjacent resources in which a frequency domain resource of a previous resource is a frequency domain resource with a highest frequency, and a frequency domain resource of a subsequent resource is a frequency domain resource with a lowest frequency. To be specific, the frequency domain resource of the resource 43 is the frequency domain resource with the highest frequency, and the frequency domain resource of the resource 44 is the frequency domain resource with the lowest frequency. For the group 5, in the five resources included in the group 5, there are two adjacent resources in which a frequency domain resource of a previous resource is a frequency domain resource with a highest frequency, and a frequency domain resource of a subsequent resource is a frequency domain resource with a lowest frequency. To be specific, the frequency domain resource of the resource 54 is the frequency domain resource with the highest frequency, and the frequency domain resource of the resource 55 is the frequency domain resource with the lowest frequency.

For example, for the group 5 and a group 6 in FIG. 8, frequency domain resources of the resource 51 in the group 5 and a resource 61 in the group 6 are different. In other words, frequency domain resources of the 1^{st} resource in the group 5 and the 1^{st} resource in the group 6 are different. The following is similar thereto, and details are not described again. Frequency domain resources of the resource 52 in the group 5 and a resource 62 in the group 6 are different, frequency domain resources of the resource 53 in the group 5 and a resource 63 in the group 6 are different, frequency domain resources of the resource 54 in the group 5 and a resource 64 in the group 6 are different, and frequency domain resources of the resource 55 in the group 5 and a resource 65 in the group 6 are different. In addition, the frequency of the frequency domain resource of the resource 51 is higher than a frequency of the frequency domain resource of the resource 61. For the group 5, in the five resources included in the group 5, there are two adjacent resources in which a frequency domain resource of a previous resource is a frequency domain resource with a highest frequency, and a frequency domain resource of a subsequent resource is a frequency domain resource with a lowest frequency. To be specific, the frequency domain resource of the resource #54 is the frequency domain resource with the highest frequency, and the frequency domain resource of the resource 55 is the frequency domain resource with the lowest frequency. For the group 6, a frequency of a frequency domain resource of a previous resource in the group 6 is lower than a frequency of a frequency domain resource of a subsequent resource. To be specific, the frequency of the frequency resource of the resource 61 is lower than a frequency of the frequency resource of the resource 62, the frequency of the frequency resource of the resource 62 is lower than a frequency of the frequency resource of the resource 63, the frequency of the frequency resource 63 is lower than a frequency of the frequency resource 64, and the frequency of the frequency resource 64 is lower than a frequency of the frequency resource of the resource 65.

Specifically, when the frequency domain resource of the m^{th} resource in the Mᵢ resources is different from the frequency domain resource of the m^{th} resource in the Mᵢ₊₁ resources, optionally, the quantity of frequency resources occupied by the M signals is the same as the quantity of time domain resources occupied by the M signals. The following uses an example in which the quantity of frequency resources occupied by the M signals is the same as the quantity of time domain resources occupied by the M signals for description.

In some embodiments, the frequency domain resource of the 1^{st} resource in the Mᵢ resources is a frequency domain resource with a highest frequency, and the frequency domain resource of the 1^{st} resource in the Mᵢ₊₁ resources is a frequency domain resource with a lowest frequency. For example, an end PRB of the frequency domain resource of the 1^{st} resource in the Mᵢ resources corresponds to a highest frequency position in all the frequency domain resources, and a start PRB of the frequency domain resource of the 1^{st} resource in the Mᵢ₊₁ resources corresponds to a lowest frequency position in all the frequency domain resources. In a possible implementation, the frequency of the frequency domain resource of the x^{th} resource in the Mᵢ resources or the Mᵢ₊₁ resources is higher than the frequency of the frequency domain resource of the (x+1)^{th} resource, and x is any integer greater than or equal to 1 and less than or equal to M-1. Alternatively, in another possible implementation, the frequency domain resource of the y^{th} resource in the Mᵢ resources or the Mᵢ₊₁ resources is a frequency domain resource with a lowest frequency, the frequency domain resource of the (y+1)^{th} resource is a frequency domain resource with a highest frequency, and y is an integer greater than or equal to 1 and less than or equal to M-1.

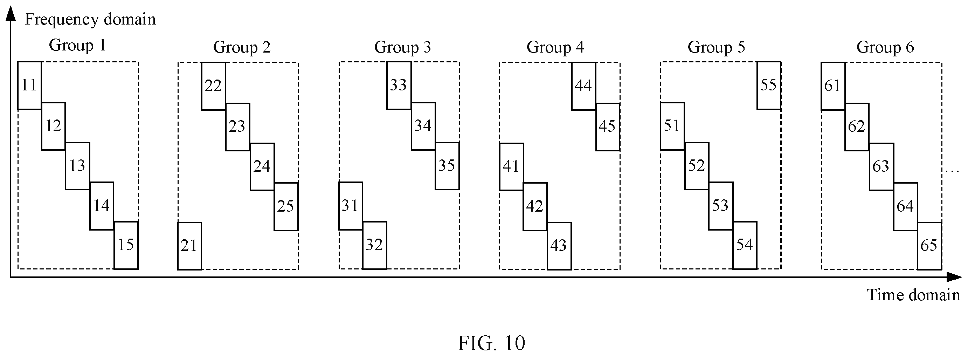

For example, for a group 1 and a group 2 in FIG. 10, frequency domain resources of a resource 11 in the group 1 and a resource 21 in the group 2 are different. In other words, frequency domain resources of the 1^{st} resource in the group 1 and the 1^{st} resource in the group 2 are different. The following is similar thereto, and details are not described again. Frequency domain resources of a resource 12 in the group 1 and a resource 22 in the group 2 are different, frequency domain resources of a resource 13 in the group 1 and a resource 23 in the group 2 are different, frequency domain resources of a resource 14 in the group 1 and a resource 24 in the group 2 are different, and frequency domain resources of a resource 15 in the group 1 and a resource 25 in the group 2 are different. In addition, the frequency domain resource of the resource 11 in the group 1 is a frequency domain resource with a highest frequency, and the frequency domain resource of the resource 21 in the group 2 is a frequency domain resource with a lowest frequency. For the group 1, a frequency of a frequency domain resource of a previous resource in the group 1 is higher than a frequency of a frequency domain resource of a subsequent resource. To be specific, the frequency of the frequency resource of the resource 11 is higher than a frequency of the frequency resource of the resource 12, the frequency of the frequency resource of the resource 12 is higher than a frequency of the frequency resource of the resource 13, the frequency of the frequency resource 13 is higher than a frequency of the frequency resource 14, and the frequency of the frequency resource 14 is higher than a frequency of the frequency resource of the resource 15. For the group 2, in the five resources included in the group 2, there are two adjacent resources in which a frequency domain resource of a previous resource is a frequency domain resource with a lowest frequency, and a frequency domain resource of a subsequent resource is a frequency domain resource with a highest frequency. To be specific, the frequency domain resource of the resource 21 is the frequency domain resource with the lowest frequency, and the frequency domain resource of the resource 22 is the frequency domain resource with the highest frequency.

Specifically, when the frequency domain resource of the m^{th} resource in the Mᵢ resources is different from the frequency domain resource of the m^{th} resource in the Mᵢ₊₁ resources, optionally, the quantity of frequency resources occupied by the M signals is the same as the quantity of time domain resources occupied by the M signals. The following uses an example in which the quantity of frequency resources occupied by the M signals is the same as the quantity of time domain resources occupied by the M signals for description.

In some embodiments, the frequency of the frequency domain resource of the 1^{st} resource in the Mᵢ resources is lower than the frequency of the frequency domain resource of the 1^{st} resource in the Mᵢ₊₁ resources. For example, the start PRB index of the frequency domain resource of the 1^{st} resource in the Mᵢ resources is n_{prb}, and the start PRB index of the frequency domain resource of the 1^{st} resource in the Mᵢ₊₁ resources is n_{prb}+Bₕₒₚ-Bₒᵥₑᵣₗₐₚ. Bₕₒₚ represents a frequency hopping bandwidth, for example, 48 RBs. Bₒᵥₑᵣₗₐₚ represents an overlapping bandwidth between two adjacent frequency domain resources, for example, 1, 2, or 4 RBs. In a possible implementation, the frequency of the frequency domain resource of the x^{th} resource in the Mᵢ resources or the Mᵢ₊₁ resources is higher than the frequency of the frequency domain resource of the (x+1)^{th} resource, and x is any integer greater than or equal to 1 and less than or equal to M-1. Alternatively, in another possible implementation, the frequency domain resource of the y^{th} resource in the Mᵢ resources or the Mᵢ₊₁ resources is a frequency domain resource with a lowest frequency, the frequency domain resource of the (y+1)^{th} resource is a frequency domain resource with a highest frequency, and y is an integer greater than or equal to 1 and less than or equal to M-1.

For example, for a group 3 and a group 4 in FIG. 9, frequency domain resources of a resource 31 in the group 3 and a resource 41 in the group 4 are different. In other words, frequency domain resources of the 1^{st} resource in the group 3 and the 1^{st} resource in the group 4 are different. The following is similar thereto, and details are not described again. Frequency domain resources of a resource 32 in the group 3 and a resource 42 in the group 4 are different, frequency domain resources of a resource 33 in the group 3 and a resource 43 in the group 4 are different, frequency domain resources of a resource 34 in the group 3 and a resource 44 in the group 4 are different, and frequency domain resources of a resource 35 in the group 3 and a resource 45 in the group 4 are different. In addition, a frequency of the frequency domain resource of the resource 31 is lower than a frequency of the frequency domain resource of the resource 41. For the group 3, in the five resources included in the group 3, there are two adjacent resources in which a frequency domain resource of a previous resource is a frequency domain resource with a lowest frequency, and a frequency domain resource of a subsequent resource is a frequency domain resource with a highest frequency. To be specific, the frequency domain resource of the resource 34 is the frequency domain resource with the lowest frequency, and the frequency domain resource of the resource 35 is the frequency domain resource with the highest frequency. For the group 4, a frequency of a frequency domain resource of a previous resource in the group 4 is higher than a frequency of a frequency domain resource of a subsequent resource. To be specific, the frequency of the frequency resource of the resource 41 is higher than a frequency of the frequency resource of the resource 42, the frequency of the frequency resource of the resource 42 is higher than a frequency of the frequency resource of the resource 43, the frequency of the frequency resource 43 is higher than a frequency of the frequency resource 44, and the frequency of the frequency resource 44 is higher than a frequency of the frequency resource of the resource 45.

For example, for the group 2 and a group 3 in FIG. 10, frequency domain resources of the resource 21 in the group 2 and a resource 31 in the group 3 are different. In other words, frequency domain resources of the 1^{st} resource in the group 2 and the 1^{st} resource in the group 3 are different. The following is similar thereto, and details are not described again. Frequency domain resources of the resource 22 in the group 2 and a resource 32 in the group 3 are different, frequency domain resources of the resource 23 in the group 2 and a resource 33 in the group 3 are different, frequency domain resources of the resource 24 in the group 2 and a resource 34 in the group 3 are different, and frequency domain resources of the resource 25 in the group 2 and a resource 35 in the group 3 are different. In addition, the frequency of the frequency domain resource of the resource 21 is lower than a frequency of the frequency domain resource of the resource 31. For the group 2, in the five resources included in the group 2, there are two adjacent resources in which a frequency domain resource of a previous resource is a frequency domain resource with a lowest frequency, and a frequency domain resource of a subsequent resource is a frequency domain resource with a highest frequency. To be specific, the frequency domain resource of the resource 21 is the frequency domain resource with the lowest frequency, and the frequency domain resource of the resource 22 is the frequency domain resource with the highest frequency. For the group 3, in the five resources included in the group 3, there are two adjacent resources in which a frequency domain resource of a resource is a frequency domain resource with a lowest frequency, and a frequency domain resource of a subsequent resource is a frequency domain resource with a highest frequency. To be specific, the frequency domain resource of the resource 32 is the frequency domain resource with the lowest frequency, and the frequency domain resource of the resource 33 is the frequency domain resource with the highest frequency.

For example, for the group 3 and a group 4 in FIG. 10, frequency domain resources of the resource 31 in the group 3 and a resource 41 in the group 4 are different. In other words, frequency domain resources of the 1^{st} resource in the group 3 and the 1^{st} resource in the group 4 are different. The following is similar thereto, and details are not described again. Frequency domain resources of the resource 32 in the group 3 and a resource 42 in the group 4 are different, frequency domain resources of the resource 33 in the group 3 and a resource 43 in the group 4 are different, frequency domain resources of the resource 34 in the group 3 and a resource 44 in the group 4 are different, and frequency domain resources of the resource 35 in the group 3 and a resource 45 in the group 4 are different. In addition, the frequency of the frequency domain resource of the resource 31 is lower than a frequency of the frequency domain resource of the resource 41. For the group 3, in the five resources included in the group 3, there are two adjacent resources in which a frequency domain resource of a previous resource is a frequency domain resource with a lowest frequency, and a frequency domain resource of a subsequent resource is a frequency domain resource with a highest frequency. To be specific, the frequency domain resource of the resource 32 is the frequency domain resource with the lowest frequency, and the frequency domain resource of the resource 33 is the frequency domain resource with the highest frequency. For the group 4, in the five resources included in the group 4, there are two adjacent resources in which a frequency domain resource of a previous resource is a frequency domain resource with a lowest frequency, and a frequency domain resource of a subsequent resource is a frequency domain resource with a highest frequency. To be specific, the frequency domain resource of the resource 43 is the frequency domain resource with the lowest frequency, and the frequency domain resource of the resource 44 is the frequency domain resource with the highest frequency.

For example, for the group 4 and a group 5 in FIG. 10, frequency domain resources of the resource 41 in the group 4 and a resource 51 in the group 5 are different. In other words, frequency domain resources of the 1^{st} resource in the group 4 and the 1^{st} resource in the group 5 are different. The following is similar thereto, and details are not described again. Frequency domain resources of the resource 42 in the group 4 and a resource 52 in the group 5 are different, frequency domain resources of the resource 43 in the group 4 and a resource 53 in the group 5 are different, frequency domain resources of the resource 44 in the group 4 and a resource 54 in the group 5 are different, and frequency domain resources of the resource 45 in the group 4 and a resource 55 in the group 5 are different. In addition, the frequency of the frequency domain resource of the resource 41 is lower than a frequency of the frequency domain resource of the resource 51. For the group 4, in the five resources included in the group 4, there are two adjacent resources in which a frequency domain resource of a previous resource is a frequency domain resource with a lowest frequency, and a frequency domain resource of a subsequent resource is a frequency domain resource with a highest frequency. To be specific, the frequency domain resource of the resource 43 is the frequency domain resource with the lowest frequency, and the frequency domain resource of the resource 44 is the frequency domain resource with the highest frequency. For the group 5, in the five resources included in the group 5, there are two adjacent resources in which a frequency domain resource of a previous resource is a frequency domain resource with a lowest frequency, and a frequency domain resource of a subsequent resource is a frequency domain resource with a highest frequency. To be specific, the frequency domain resource of the resource 54 is the frequency domain resource with the lowest frequency, and the frequency domain resource of the resource 55 is the frequency domain resource with the highest frequency.

For example, for the group 5 and a group 6 in FIG. 10, frequency domain resources of the resource 51 in the group 5 and a resource 61 in the group 6 are different. In other words, frequency domain resources of the 1^{st} resource in the group 5 and the 1^{st} resource in the group 6 are different. The following is similar thereto, and details are not described again. Frequency domain resources of the resource 52 in the group 5 and a resource 62 in the group 6 are different, frequency domain resources of the resource 53 in the group 5 and a resource 63 in the group 6 are different, frequency domain resources of the resource 54 in the group 5 and a resource 64 in the group 6 are different, and frequency domain resources of the resource 55 in the group 5 and a resource 65 in the group 6 are different. In addition, the frequency of the frequency domain resource of the resource 51 is lower than a frequency of the frequency domain resource of the resource 61. For the group 5, in the five resources included in the group 5, there are two adjacent resources in which a frequency domain resource of a previous resource is a frequency domain resource with a lowest frequency, and a frequency domain resource of a subsequent resource is a frequency domain resource with a highest frequency. To be specific, the frequency domain resource of the resource #54 is the frequency domain resource with the lowest frequency, and the frequency domain resource of the resource 55 is the frequency domain resource with the highest frequency. For the group 6, a frequency of a frequency domain resource of a previous resource in the group 6 is higher than a frequency of a frequency domain resource of a subsequent resource. To be specific, the frequency of the frequency resource of the resource 61 is higher than a frequency of the frequency resource of the resource 62, the frequency of the frequency resource of the resource 62 is higher than a frequency of the frequency resource of the resource 63, the frequency of the frequency resource 63 is higher than a frequency of the frequency resource 64, and the frequency of the frequency resource 64 is higher than a frequency of the frequency resource of the resource 65.

Specifically, when the frequency domain resource of the m^{th} resource in the Mᵢ resources is different from the frequency domain resource of the m^{th} resource in the Mᵢ₊₁ resources, optionally, the quantity of frequency resources occupied by the M signals is the same as the quantity of time domain resources occupied by the M signals. The following uses an example in which the quantity of frequency resources occupied by the M signals is the same as the quantity of time domain resources occupied by the M signals for description.

In a possible implementation, a frequency domain resource of a y^{th} resource in the Mᵢ resources is a frequency domain resource with a highest frequency, a frequency domain resource of a (y+1)^{th} resource is a frequency domain resource with a lowest frequency, a frequency domain resource of a w^{th} resource in the Mᵢ₊₁ resources is a frequency domain resource with a lowest frequency, a frequency domain resource of a (w+1)^{th} resource is a frequency domain resource with a highest frequency, and y and w are integers greater than or equal to 1 and less than or equal to M-1.

For example, for the group 2 and the group 3 in FIG. 9, frequency domain resources of the resource 21 in the group 2 and the resource 31 in the group 3 are different. In other words, frequency domain resources of the 1^{st} resource in the group 2 and the 1^{st} resource in the group 3 are different. The following is similar thereto, and details are not described again. Frequency domain resources of the resource 22 in the group 2 and the resource 32 in the group 3 are different, frequency domain resources of the resource 23 in the group 2 and the resource 33 in the group 3 are different, frequency domain resources of the resource 24 in the group 2 and the resource 34 in the group 3 are different, and frequency domain resources of the resource 25 in the group 2 and the resource 35 in the group 3 are different. For the group 2, in the five resources included in the group 2, there are two adjacent resources in which a frequency domain resource of a previous resource is a frequency domain resource with a highest frequency, and a frequency domain resource of a subsequent resource is a frequency domain resource with a lowest frequency. To be specific, the frequency domain resource of the resource 21 is the frequency domain resource with the highest frequency, and the frequency domain resource of the resource 22 is the frequency domain resource with the lowest frequency. For the group 3, in the five resources included in the group 3, there are two adjacent resources in which a frequency domain resource of a previous resource is a frequency domain resource with a lowest frequency, and a frequency domain resource of a subsequent resource is a frequency domain resource with a highest frequency. To be specific, the frequency domain resource of the resource 34 is the frequency domain resource with the lowest frequency, and the frequency domain resource of the resource 35 is the frequency domain resource with the highest frequency.

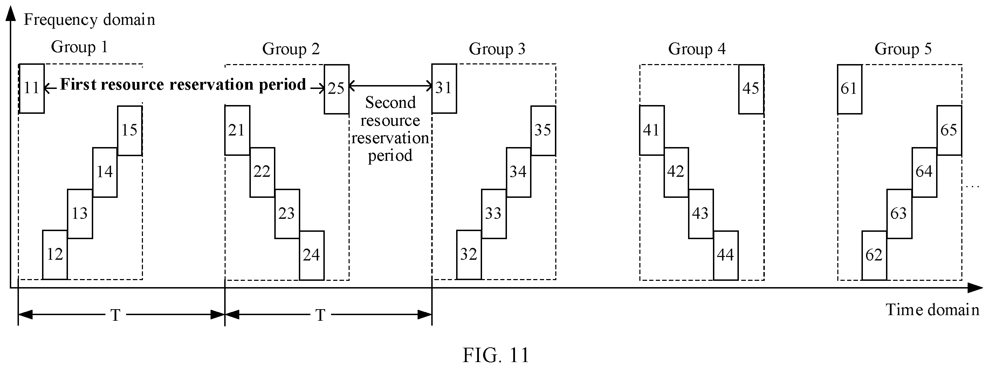

For example, for a group 1 and a group 2 in FIG. 11, frequency domain resources of a resource 11 in the group 1 and a resource 21 in the group 2 are different. In other words, frequency domain resources of the 1^{st} resource in the group 1 and the 1^{st} resource in the group 2 are different. The following is similar thereto, and details are not described again. Frequency domain resources of a resource 12 in the group 1 and a resource 22 in the group 2 are different, frequency domain resources of a resource 13 in the group 1 and a resource 23 in the group 2 are different, frequency domain resources of a resource 14 in the group 1 and a resource 24 in the group 2 are different, and frequency domain resources of a resource 15 in the group 1 and a resource 25 in the group 2 are different. For the group 1, in the five resources included in the group 1, there are two adjacent resources in which a frequency domain resource of a previous resource is a frequency domain resource with a highest frequency, and a frequency domain resource of a subsequent resource is a frequency domain resource with a lowest frequency. To be specific, the frequency domain resource of the resource 11 is the frequency domain resource with the highest frequency, and the frequency domain resource of the resource 12 is the frequency domain resource with the lowest frequency. For the group 2, in the five resources included in the group 2, there are two adjacent resources in which a frequency domain resource of a previous resource is a frequency domain resource with a lowest frequency, and a frequency domain resource of a subsequent resource is a frequency domain resource with a highest frequency. To be specific, the frequency domain resource of the resource 24 is the frequency domain resource with the lowest frequency, and the frequency domain resource of the resource 25 is the frequency domain resource with the highest frequency.

For example, for a group 3 and a group 4 in FIG. 11, frequency domain resources of a resource 31 in the group 3 and a resource 41 in the group 4 are different. In other words, frequency domain resources of the 1^{st} resource in the group 3 and the 1^{st} resource in the group 4 are different. The following is similar thereto, and details are not described again. Frequency domain resources of a resource 32 in the group 3 and a resource 42 in the group 4 are different, frequency domain resources of a resource 33 in the group 3 and a resource 43 in the group 4 are different, frequency domain resources of a resource 34 in the group 3 and a resource 44 in the group 4 are different, and frequency domain resources of a resource 35 in the group 3 and a resource 45 in the group 4 are different. For the group 3, in the five resources included in the group 3, there are two adjacent resources in which a frequency domain resource of a previous resource is a frequency domain resource with a highest frequency, and a frequency domain resource of a subsequent resource is a frequency domain resource with a lowest frequency. To be specific, the frequency domain resource of the resource 31 is the frequency domain resource with the highest frequency, and the frequency domain resource of the resource 32 is the frequency domain resource with the lowest frequency. For the group 4, in the five resources included in the group 4, there are two adjacent resources in which a frequency domain resource of a previous resource is a frequency domain resource with a lowest frequency, and a frequency domain resource of a subsequent resource is a frequency domain resource with a highest frequency. To be specific, the frequency domain resource of the resource 44 is the frequency domain resource with the lowest frequency, and the frequency domain resource of the resource 45 is the frequency domain resource with the highest frequency.

In a possible implementation, the frequency domain resource of the y^{th} resource in the Mᵢ resources is the frequency domain resource with a lowest frequency, the frequency domain resource of the (y+1)^{th} resource is the frequency domain resource with the highest frequency, the frequency domain resource of the w^{th} resource in the Mᵢ₊₁ resources is the frequency domain resource with the highest frequency, the frequency domain resource of the (w+1)^{th} resource is the frequency domain resource with the lowest frequency, and y and w are integers greater than or equal to 1 and less than or equal to M-1.

For example, for the group 2 and the group 3 in FIG. 11, frequency domain resources of the resource 21 in the group 2 and the resource 31 in the group 3 are different. In other words, frequency domain resources of the 1^{st} resource in the group 2 and the 1^{st} resource in the group 3 are different. The following is similar thereto, and details are not described again. Frequency domain resources of the resource 22 in the group 2 and the resource 32 in the group 3 are different, frequency domain resources of the resource 23 in the group 2 and the resource 33 in the group 3 are different, frequency domain resources of the resource 24 in the group 2 and the resource 34 in the group 3 are different, and frequency domain resources of the resource 25 in the group 2 and the resource 35 in the group 3 are different. For the group 2, in the five resources included in the group 2, there are two adjacent resources in which a frequency domain resource of a previous resource is a frequency domain resource with a lowest frequency, and a frequency domain resource of a subsequent resource is a frequency domain resource with a highest frequency. To be specific, the frequency domain resource of the resource 24 is the frequency domain resource with the lowest frequency, and the frequency domain resource of the resource 25 is the frequency domain resource with the highest frequency. For the group 3, in the five resources included in the group 3, there are two adjacent resources in which a frequency domain resource of a previous resource is a frequency domain resource with a highest frequency, and a frequency domain resource of a subsequent resource is a frequency domain resource with a lowest frequency. To be specific, the frequency domain resource of the resource 31 is the frequency domain resource with the highest frequency, and the frequency domain resource of the resource 32 is the frequency domain resource with the lowest frequency.

For example, for the group 4 and a group 5 in FIG. 11, frequency domain resources of the resource 41 in the group 4 and a resource 51 in the group 5 are different. In other words, frequency domain resources of the 1^{st} resource in the group 4 and the 1^{st} resource in the group 5 are different. The following is similar thereto, and details are not described again. Frequency domain resources of the resource 42 in the group 4 and a resource 52 in the group 5 are different, frequency domain resources of the resource 43 in the group 4 and a resource 53 in the group 5 are different, frequency domain resources of the resource 44 in the group 4 and a resource 54 in the group 5 are different, and frequency domain resources of the resource 45 in the group 4 and a resource 55 in the group 5 are different. For the group 4, in the five resources included in the group 4, there are two adjacent resources in which a frequency domain resource of a previous resource is a frequency domain resource with a lowest frequency, and a frequency domain resource of a subsequent resource is a frequency domain resource with a highest frequency. To be specific, the frequency domain resource of the resource 44 is the frequency domain resource with the lowest frequency, and the frequency domain resource of the resource 45 is the frequency domain resource with the highest frequency. For the group 5, in the five resources included in the group 5, there are two adjacent resources in which a frequency domain resource of a previous resource is a frequency domain resource with a highest frequency, and a frequency domain resource of a subsequent resource is a frequency domain resource with a lowest frequency. To be specific, the frequency domain resource of the resource 51 is the frequency domain resource with the highest frequency, and the frequency domain resource of the resource 52 is the frequency domain resource with the lowest frequency.

In still another possible implementation, a frequency of a frequency domain resource of an x^{th} resource in the Mᵢ resources is lower than a frequency of a frequency domain resource of an (x+1)^{th} resource, a frequency of a frequency domain resource of an n^{th} resource in the Mᵢ₊₁ resources is higher than a frequency of a frequency domain resource of an (n+1)^{th} resource, and x and n are any integers greater than or equal to 1 and less than or equal to M-1.

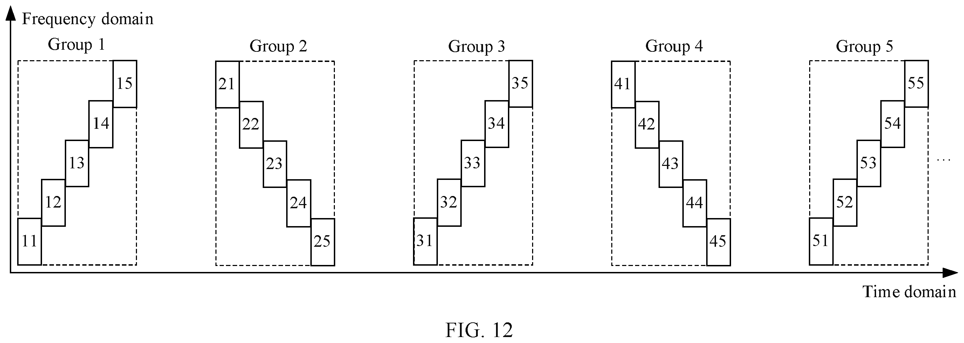

For example, for a group 1 and a group 2 in FIG. 12, frequency domain resources of a resource 11 in the group 1 and a resource 21 in the group 2 are different. In other words, frequency domain resources of the 1^{st} resource in the group 1 and the 1^{st} resource in the group 2 are different. The following is similar thereto, and details are not described again. Frequency domain resources of a resource 12 in the group 1 and a resource 22 in the group 2 are different, frequency domain resources of a resource 13 in the group 1 and a resource 23 in the group 2 are different, frequency domain resources of a resource 14 in the group 1 and a resource 24 in the group 2 are different, and frequency domain resources of a resource 15 in the group 1 and a resource 25 in the group 2 are different. For the group 1, a frequency of a frequency domain resource of a previous resource in the group 1 is lower than a frequency of a frequency domain resource of a subsequent resource. To be specific, a frequency of the frequency resource of the resource 11 is lower than a frequency of the frequency resource of the resource 12, the frequency of the frequency resource of the resource 12 is lower than a frequency of the frequency resource of the resource 13, the frequency of the frequency resource 13 is lower than a frequency of the frequency resource 14, and the frequency of the frequency resource 14 is lower than a frequency of the frequency resource of the resource 15. For the group 2, a frequency of a frequency domain resource of a previous resource in the group 2 is higher than a frequency of a frequency domain resource of a subsequent resource. To be specific, a frequency of the frequency resource of the resource 21 is higher than a frequency of the frequency resource of the resource 22, the frequency of the frequency resource of the resource 22 is higher than a frequency of the frequency resource of the resource 23, the frequency of the frequency resource 23 is higher than a frequency of the frequency resource 24, and the frequency of the frequency resource 24 is higher than a frequency of the frequency resource of the resource 25.

For example, for a group 3 and a group 4 in FIG. 12, frequency domain resources of a resource 31 in the group 3 and a resource 41 in the group 4 are different. In other words, frequency domain resources of the 1^{st} resource in the group 3 and the 1^{st} resource in the group 4 are different. The following is similar thereto, and details are not described again. Frequency domain resources of a resource 32 in the group 3 and a resource 42 in the group 4 are different, frequency domain resources of a resource 33 in the group 3 and a resource 43 in the group 4 are different, frequency domain resources of a resource 34 in the group 3 and a resource 44 in the group 4 are different, and frequency domain resources of a resource 35 in the group 3 and a resource 45 in the group 4 are different. For the group 3, a frequency of a frequency domain resource of a previous resource in the group 3 is lower than a frequency of a frequency domain resource of a subsequent resource. To be specific, a frequency of the frequency resource of the resource 31 is lower than a frequency of the frequency resource of the resource 32, the frequency of the frequency resource of the resource 32 is lower than a frequency of the frequency resource of the resource 33, the frequency of the frequency resource 33 is lower than a frequency of the frequency resource 34, and the frequency of the frequency resource 34 is lower than a frequency of the frequency resource of the resource 35. For the group 4, a frequency of a frequency domain resource of a previous resource in the group 4 is higher than a frequency of a frequency domain resource of a subsequent resource. To be specific, a frequency of the frequency resource of the resource 41 is higher than a frequency of the frequency resource of the resource 42, the frequency of the frequency resource of the resource 42 is higher than a frequency of the frequency resource of the resource 43, the frequency of the frequency resource 43 is higher than a frequency of the frequency resource 44, and the frequency of the frequency resource 44 is higher than a frequency of the frequency resource of the resource 45.

In still another possible implementation, the frequency of the frequency domain resource of an x^{th} resource in the Mᵢ resources is higher than the frequency of the frequency domain resource of the (x+1)^{th} resource, the frequency of the frequency domain resource of the n^{th} resource in the Mᵢ₊₁ resources is lower than the frequency of the frequency domain resource of the (n+1)^{th} resource, and x and n are any integers greater than or equal to 1 and less than or equal to M-1.

For example, for the group 4 and a group 5 in FIG. 9, frequency domain resources of the resource 41 in the group 4 and a resource 51 in the group 5 are different. In other words, frequency domain resources of the 1^{st} resource in the group 4 and the 1^{st} resource in the group 5 are different. The following is similar thereto, and details are not described again. Frequency domain resources of the resource 42 in the group 4 and a resource 52 in the group 5 are different, frequency domain resources of the resource 43 in the group 4 and a resource 53 in the group 5 are different, frequency domain resources of the resource 44 in the group 4 and a resource 54 in the group 5 are different, and frequency domain resources of the resource 45 in the group 4 and a resource 55 in the group 5 are different. For the group 4, a frequency of a frequency domain resource of a previous resource in the group 4 is higher than a frequency of a frequency domain resource of a subsequent resource. To be specific, the frequency of the frequency resource of the resource 41 is higher than the frequency of the frequency resource of the resource 42, the frequency of the frequency resource of the resource 42 is higher than the frequency of the frequency resource of the resource 43, the frequency of the frequency resource 43 is higher than the frequency of the frequency resource 44, and the frequency of the frequency resource 44 is higher than the frequency of the frequency resource of the resource 45. For the group 5, a frequency of a frequency domain resource of a previous resource in the group 5 is lower than a frequency of a frequency domain resource of a subsequent resource. To be specific, a frequency of the frequency resource of the resource 51 is lower than a frequency of the frequency resource of the resource 52, the frequency of the frequency resource of the resource 52 is lower than a frequency of the frequency resource of the resource 53, the frequency of the frequency resource 53 is lower than a frequency of the frequency resource 54, and the frequency of the frequency resource 54 is lower than a frequency of the frequency resource of the resource 55.

For example, for the group 2 and the group 3 in FIG. 12, frequency domain resources of the resource 21 in the group 2 and the resource 31 in the group 3 are different. In other words, frequency domain resources of the 1^{st} resource in the group 2 and the 1^{st} resource in the group 3 are different. The following is similar thereto, and details are not described again. Frequency domain resources of the resource 22 in the group 2 and the resource 32 in the group 3 are different, frequency domain resources of the resource 23 in the group 2 and the resource 33 in the group 3 are different, frequency domain resources of the resource 24 in the group 2 and the resource 34 in the group 3 are different, and frequency domain resources of the resource 25 in the group 2 and the resource 35 in the group 3 are different. For the group 2, a frequency of a frequency domain resource of a previous resource in the group 2 is higher than a frequency of a frequency domain resource of a subsequent resource. To be specific, the frequency of the frequency resource of the resource 21 is higher than the frequency of the frequency resource of the resource 22, the frequency of the frequency resource of the resource 22 is higher than the frequency of the frequency resource of the resource 23, the frequency of the frequency resource 23 is higher than the frequency of the frequency resource 24, and the frequency of the frequency resource 24 is higher than the frequency of the frequency resource of the resource 25. For the group 3, a frequency of a frequency domain resource of a previous resource in the group 3 is lower than a frequency of a frequency domain resource of a subsequent resource. To be specific, the frequency of the frequency resource of the resource 31 is lower than the frequency of the frequency resource of the resource 32, the frequency of the frequency resource of the resource 32 is lower than the frequency of the frequency resource of the resource 33, the frequency of the frequency resource 33 is lower than the frequency of the frequency resource 34, and the frequency of the frequency resource 34 is lower than the frequency of the frequency resource of the resource 35.

For example, for the group 4 and a group 5 in FIG. 12, frequency domain resources of the resource 41 in the group 4 and a resource 51 in the group 5 are different. In other words, frequency domain resources of the 1^{st} resource in the group 4 and the 1^{st} resource in the group 5 are different. The following is similar thereto, and details are not described again. Frequency domain resources of the resource 42 in the group 4 and a resource 52 in the group 5 are different, frequency domain resources of the resource 43 in the group 4 and a resource 53 in the group 5 are different, frequency domain resources of the resource 44 in the group 4 and a resource 54 in the group 5 are different, and frequency domain resources of the resource 45 in the group 4 and a resource 55 in the group 5 are different. For the group 4, a frequency of a frequency domain resource of a previous resource in the group 4 is higher than a frequency of a frequency domain resource of a subsequent resource. To be specific, the frequency of the frequency resource of the resource 41 is higher than the frequency of the frequency resource of the resource 42, the frequency of the frequency resource of the resource 42 is higher than the frequency of the frequency resource of the resource 43, the frequency of the frequency resource 43 is higher than the frequency of the frequency resource 44, and the frequency of the frequency resource 44 is higher than the frequency of the frequency resource of the resource 45. For the group 5, a frequency of a frequency domain resource of a previous resource in the group 5 is lower than a frequency of a frequency domain resource of a subsequent resource. To be specific, a frequency of the frequency resource of the resource 51 is lower than a frequency of the frequency resource of the resource 52, the frequency of the frequency resource of the resource 52 is lower than a frequency of the frequency resource of the resource 53, the frequency of the frequency resource 53 is lower than a frequency of the frequency resource 54, and the frequency of the frequency resource 54 is lower than a frequency of the frequency resource of the resource 55.

Specifically, when the frequency domain resource of the m^{th} resource in the Mᵢ resources is the same as the frequency domain resource of the m^{th} resource in the Mᵢ₊₁ resources, the frequency domain resource of the 1^{st} resource in the Mᵢ resources is the same as a frequency domain resource of an M^{th} resource, and the frequency domain resource of the 1^{st} resource in the Mᵢ₊₁ resources is the same as a frequency domain resource of the M^{th} resource. m is any integer greater than or equal to 1 and less than or equal to M. Optionally, the quantity of frequency resources occupied by the M signals is less than the quantity of time domain resources occupied by the M signals. The following uses an example in which the quantity of frequency resources occupied by the M signals is less than the quantity of time domain resources occupied by the M signals for description.

In a possible implementation, the frequency domain resource of the 1^{st} resource in the Mᵢ resources or the Mᵢ₊₁ resources and the frequency domain resource of the M^{th} resource are frequency domain resources with a lowest frequency. In addition, a frequency domain resource of an (M-1)^{th} resource in the Mᵢ resources or the Mᵢ₊₁ resources is a frequency domain resource with a highest frequency, and the frequency domain resource of the M^{th} resource is a frequency domain resource with a lowest frequency.

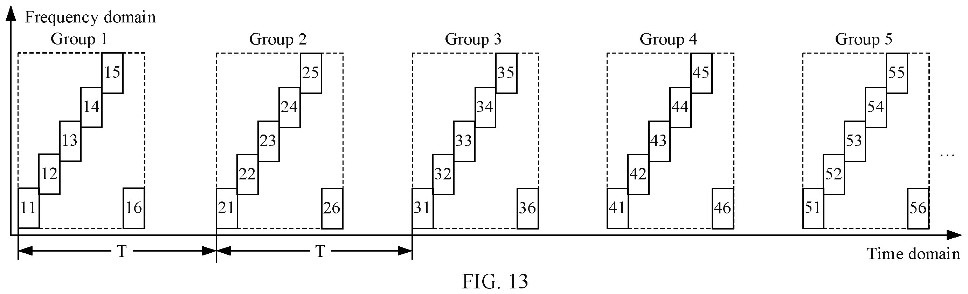

For example, for each of a group 1 to a group 5 in FIG. 13, a quantity of frequency domain resources is less than a quantity of time domain resources. In addition, frequency domain resources of a resource 11, a resource 21, a resource 31, a resource 41, and a resource 51 are the same, frequency domain resources of a resource 12, a resource 22, a resource 32, a resource 42, and a resource 52 are the same, frequency domain resources of a resource 13, a resource 23, a resource 33, a resource 43, and a resource 53 are the same, frequency domain resources of a resource 14, a resource 24, a resource 34, a resource 44, and a resource 54 are the same, frequency domain resources of a resource 15, a resource 25, a resource 35, a resource 45, and a resource 55 are the same, and frequency domain resources of a resource 16, a resource 26, a resource 36, a resource 46, and a resource 56 are the same. For any one of the group 1 to the group 5, in six resources included in the group, a frequency domain resource of the 1^{st} resource and a frequency domain resource of the 6^{th} resource are frequency domain resources with a lowest frequency, a frequency domain resource of the 5^{th} resource is a frequency domain resource with a highest frequency, and the frequency domain resource of the 6^{th} resource is a frequency domain resource with the lowest frequency.

In another possible implementation, the frequency domain resource of the 1^{st} resource in the Mᵢ resources or the Mᵢ₊₁ resources and the frequency domain resource of the M^{th} resource are frequency domain resources with a highest frequency. In this case, the frequency domain resource of the (M-1)^{th} resource in the Mᵢ resources or the Mᵢ₊₁ resources is a frequency domain resource with a lowest frequency, and the frequency domain resource of the M^{th} resource is a frequency domain resource with the highest frequency.

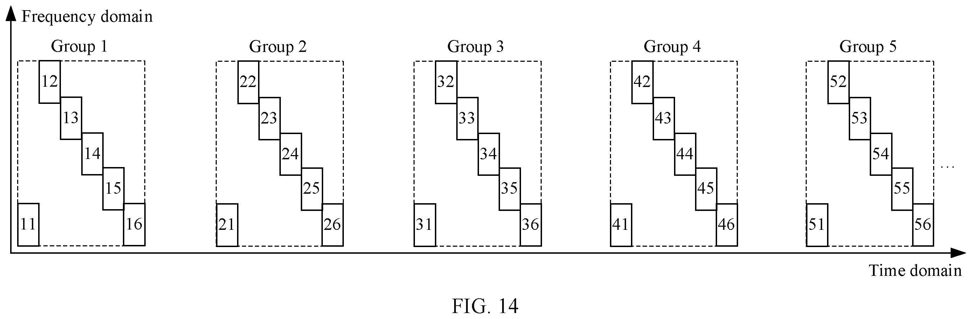

For example, for each of a group 1 to a group 5 in FIG. 14, a quantity of frequency domain resources is less than a quantity of time domain resources. In addition, frequency domain resources of a resource 11, a resource 21, a resource 31, a resource 41, and a resource 51 are the same, frequency domain resources of a resource 12, a resource 22, a resource 32, a resource 42, and a resource 52 are the same, frequency domain resources of a resource 13, a resource 23, a resource 33, a resource 43, and a resource 53 are the same, frequency domain resources of a resource 14, a resource 24, a resource 34, a resource 44, and a resource 54 are the same, frequency domain resources of a resource 15, a resource 25, a resource 35, a resource 45, and a resource 55 are the same, and frequency domain resources of a resource 16, a resource 26, a resource 36, a resource 46, and a resource 56 are the same. For any one of the group 1 to the group 5, in six resources included in the group, a frequency domain resource of the 1^{st} resource and a frequency domain resource of the 6^{th} resource are frequency domain resources with a highest frequency, the frequency domain resource of the 1^{st} resource is a frequency domain resource with the lowest frequency, and a frequency domain resource of the 2^{nd} resource is a frequency domain resource with a highest frequency. It may be understood that FIG. 7 to FIG. 14 are merely examples, and constitute no limitation on the protection scope of this application. That is, the communication method provided in this application is not limited to periodic frequency hopping patterns shown in FIG. 7 to FIG. 14, and any frequency hopping pattern falls within the protection scope of this application provided that an M^{th} signal in an i^{th} group of signals and the 1^{st} signal in an (i+1)^{th} group of signals occupy a same frequency domain resource to avoid frequency hopping between periodicities.

It should be noted that, in the solution of this application, the frequency of the frequency domain resource may be a frequency of a highest-frequency subcarrier, a lowest-frequency subcarrier, or a center subcarrier in subcarriers included in the frequency domain resource, or may be a frequency of another agreed position. This is not limited in this application.

In addition, it should be further noted that FIG. 7 to FIG. 14 are merely example drawings. For ease of description, a time length occupied by each frequency domain resource in each time window is slightly exaggerated. In addition, for clarity of the drawings, a time length between time windows is reduced. That is, the drawings are merely examples and are not strictly drawn to scale. It should be understood that, channel information of a plurality of frequency hopping resources in each time window may be considered basically unchanged. For different time windows, a channel changes.

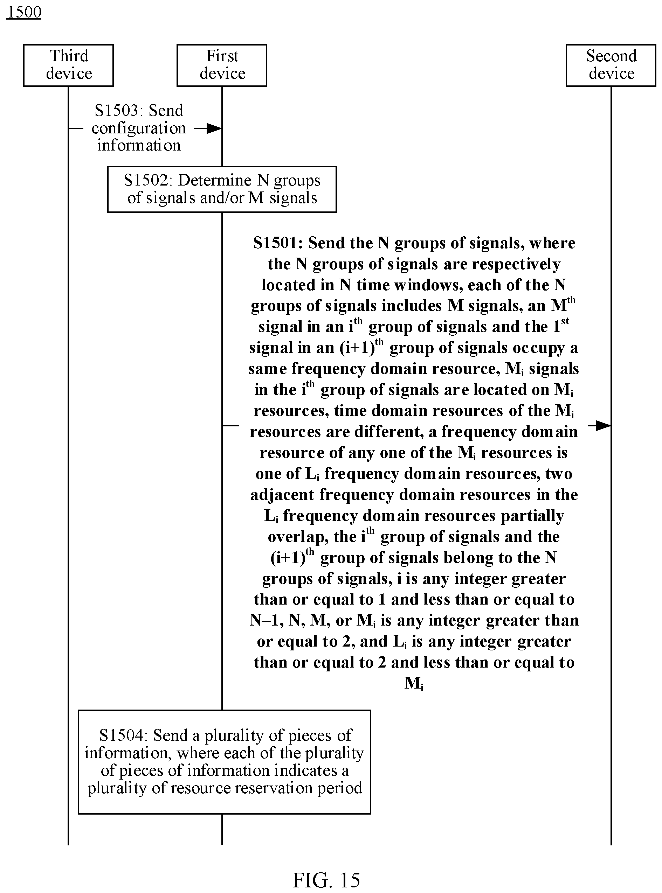

FIG. 15 is a schematic flowchart of a second communication method 1500 according to an embodiment of this application. As shown in FIG. 15, the schematic flowchart is shown by using interaction between a first device and a second device as an example. Steps performed by the first device and/or the second device may be performed by a module or a unit in the first device and/or the second device, for example, performed by a chip in the first device and/or the second device.

Similarly, when the method 1500 is applied to a sensing scenario, N groups of signals or M signals are sensing signals. The sensing signal may be a sensing reference signal, a positioning reference signal, a communication signal used for sensing, or the like. This is not limited in this application. In this case, the first device and the second device may be the same. For example, both the first device and the second device are terminal devices. Alternatively, the first device and the second device may be different. For example, the first device is a terminal device, and the second device is a network device. For descriptions of this part, refer to the descriptions of FIG. 5. Details are not described herein again. Specifically, the method includes the following steps.

S1501: The first device sends the N groups of signals to the second device.

Before S1501, the method 1500 further includes S1502: The first device determines the N groups of signals and/or the M signals.

Specifically, for S1501 and S1502, respectively refer to S501 and S502 in FIG. 5. Details are not described herein again.

Optionally, before S1502, the method 150 may further include S1503: The first device receives configuration information sent by a third device.

In a possible implementation, the third device is a network device, for example, a base station, and the first device is, for example, a UE. In a sensing scenario (a Uu interface) in which the base station participates, the base station may configure frequency hopping patterns of N groups of reference signals for the UE by using configuration information carried in signaling. The configuration information may include a quantity of hops (for example, a quantity of time domain resources), a bandwidth of each hop, an overlapping bandwidth of each hop, a position of a start PRB of the 1^{st} hop, a start slot and a start symbol of the 1^{st} hop, a slot offset and a symbol offset of each hop relative to the 1^{st} hop, a quantity of consecutive occupied symbols, or the like, and may further provide a lowest frequency or a highest frequency. In addition, the configuration information further includes a length of each of N time windows and a frequency hopping pattern in each time window.

Optionally, it may be configured that a default frequency hopping pattern is used in all the time windows. For example, any frequency hopping pattern in FIG. 7 to FIG. 14 is used. After a frequency hopping pattern of the 1^{st} time window is configured, a frequency hopping parameter of a subsequent time window may be determined based on a frequency hopping parameter of the 1^{st} time window. For example, parameters of the 1^{st} period may be directly reused, such as a bandwidth of each hop, an overlapping bandwidth of each hop, a slot offset and a symbol offset of each hop relative to the 1^{st} hop, and a quantity of consecutive occupied symbols. It may be understood that, that the default frequency hopping pattern is used in all the time windows does not mean that frequency hopping patterns of all the time windows are the same. For example, in the frequency hopping patterns shown in FIG. 7 to FIG. 12, frequency hopping patterns used in different time windows may be different.

In another possible implementation, for an SL sensing scenario (a PC5 interface), for example, a monostatic sensing scenario of the UE or a bistatic sensing scenario in which the UE performs sending, in such a scenario, the UE may use a resource allocation mode of autonomous selection (for example, a mode 2; refer to related descriptions in conventional technologies, and details are not described herein), listen to resource reservation information sent by another UE and measure corresponding receive power before sending a signal, and select a resource that is not reserved by the another UE or that is reserved by the another UE but has low receive power, to avoid in advance occupation of a same transmission resource between the UEs.

To avoid mutual interference between devices, optionally, the method 1500 further includes S1504.

S1504: The first device sends a plurality of pieces of information, where each of the plurality of pieces of information indicates a plurality of resource reservation periods.

Specifically, the resource reservation period is defined as a time interval between two resources corresponding to a same frequency domain resource in two adjacent time windows, that is, a time interval between a time domain resource of a j^{th} resource in Mᵢ resources of an i^{th} group and a time domain resource of a p^{th} resource in Mᵢ₊₁ resources of an (i+1)^{th} group. A frequency domain resource of the j^{th} resource is the same as a frequency domain resource of the p^{th} resource, and j and p are any integers greater than or equal to 1 and less than or equal to M.

Optionally, the plurality of resource reservation periods may be carried in sidelink control information (Sidelink Control Information, SCI), for example, in a resource reservation period field in the SCI. It should be noted that, between any two adjacent time windows, the time interval between two resources corresponding to a same frequency domain resource may be identical or different. When the time interval is identical, the resource reservation period field carries one resource reservation period. When the time interval is different, the resource reservation period field carries a plurality of resource reservation periods.

In some embodiments, the time interval between the time domain resource of the j^{th} resource in the Mᵢ resources and the time domain resource of the p^{th} resource in the Mᵢ₊₁ resources may be *T* + *Tₛ* or *T* - (*M* - 1)*Tₛ*. The frequency domain resource of the j^{th} resource is the same as the frequency domain resource of the p^{th} resource, j and p are any integers greater than or equal to 1 and less than or equal to M, *Tₛ* is a time interval between two adjacent time domain resources in the Mᵢ resources or the Mᵢ₊₁ resources, and T is an interval between a start sending moment of Mᵢ signals and a start sending moment of Mᵢ₊₁ signals. It may be understood that T may alternatively be an interval between an end sending moment of the Mᵢ signals and an end sending moment of the Mᵢ₊₁ signals, or the like, or T may be understood as a length of each time window or a period length. This is not limited in this application.

For example, in the group 1, the group 2, and the group 3 in FIG. 8, the resource 14, the resource 25, and the resource 31 are resources with a same frequency domain resource. A resource reservation period represented by the resource 14 and the resource 25 is *T* + *Tₛ*, and a resource reservation period represented by the resource 25 and the resource 31 is *T* - 4*Tₛ*.

In some other embodiments, the time interval between the time domain resource of the j^{th} resource in the Mᵢ resources and the time domain resource of the p^{th} resource in the Mᵢ₊₁ resources is *T* + (*M* - 1 - 2*q*)*Tₛ* or *T* - (*M* - 1 - 2*q*)*Tₛ*. The frequency domain resource of the j^{th} resource is the same as the frequency domain resource of the p^{th} resource, j and p are any integers greater than or equal to 1 and less than or equal to M, *Tₛ* is a time interval between two adjacent time domain resources in the Mᵢ resources or the Mᵢ₊₁ resources, *q* is an integer greater than or equal to 0 and *q* is less than a quantity of frequency domain resources in the Mᵢ resources or the Mᵢ₊₁ resources, a value of *q* is related to the frequency domain resource of the j^{th} resource in the Mᵢ resources or the frequency domain resource of the p^{th} resource in the Mᵢ₊₁ resources, and T is an interval between a start sending moment of the Mᵢ signals and a start sending moment of the Mᵢ₊₁ signals. It may be understood that T may alternatively be an interval between an end sending moment of the Mᵢ signals and an end sending moment of the Mᵢ₊₁ signals, or the like, or T may be understood as a length of each time window or a period length. This is not limited in this application.

For example, in the group 1, the group 2, and the group 3 in FIG. 11, the resource 11, the resource 25, and the resource 31 are resources with a same frequency domain resource. For the resource 11 and the resource 25, because the frequency domain resources of the resource 11, the resource 25, and the resource 31 are all the 1^{st} frequency domain resources in all the frequency domain resources (for example, the frequency resources are sorted in descending order), q is equal to 0 (similarly, for the 2^{nd} frequency domain resources in all the frequency domain resources, q is equal to 1, and so on, and details are not described herein), and a resource reservation period represented by the resource 11 and the resource 25 is *T* + (5 - 1 - 2 ∗ 0)*Tₛ*, that is, *T* + 4*Tₛ*. A resource reservation period represented by the resource 25 and the resource 31 is *T* - 4*Tₛ*.

In some other embodiments, the time interval between the time domain resource of the j^{th} resource in the Mᵢ resources and the time domain resource of the p^{th} resource in the Mᵢ₊₁ resources is *T*. T is an interval between a start sending moment of the Mᵢ signals and a start sending moment of the Mᵢ₊₁ signals. It may be understood that T may alternatively be an interval between an end sending moment of the Mᵢ signals and an end sending moment of the Mᵢ₊₁ signals, or the like. Alternatively, T is a time interval between the time domain resource of the j^{th} resource in the Mᵢ resources and a time domain resource of a j^{th} resource in the Mᵢ₊₁ resources, and j is any integer greater than or equal to 1 and less than or equal to M. Alternatively, T may be understood as a length of each time window or a period length. This is not limited in this application.

For example, in the group 1, the group 2, and the group 3 in FIG. 13, the resource 11, the resource 21, and the resource 31 are resources with a same frequency domain resource. A resource reservation period represented by the resource 11 and the resource 21 is *T*, and a resource reservation period represented by the resource 21 and the resource 31 is also *T*.

Optionally, the first device may send a plurality of pieces of information in each time window. Optionally, the first device may send M pieces of information in each time window, and each of the M pieces of information indicates a resource reservation period of each of the M signals.

It should be understood that the embodiments in FIG. 5 and FIG. 15 in embodiments of this application are merely examples for description, and examples in the figures do not constitute any limitation on an execution sequence. A person skilled in the art may flexibly adjust a sequence of steps based on the examples in the figures. In addition, the sequence numbers of the foregoing processes do not mean an execution sequence, and the execution sequence of the processes should be determined based on functions and internal logic of the processes. In addition, the foregoing steps are not mandatory steps. When the problem to be resolved in this application can still be resolved without one or more of the steps, technical solutions corresponding to the steps also fall within the scope disclosed in this application. Various numerical numbers or sequence numbers in the foregoing processes are merely used for distinguishing for ease of description, and should not constitute any limitation on implementation processes of embodiments of this application.

In addition, the solutions in embodiments of this application may be appropriately combined for use, and explanations or descriptions of terms in embodiments may be mutually referenced or explained in embodiments. This is not limited.

In the foregoing embodiments provided in this application, various solutions of the communication method provided in embodiments of this application are separately described from perspectives of devices/network elements and interaction between the devices/network elements. It may be understood that, to implement the foregoing functions, the network elements and the devices include corresponding hardware structures and/or software modules for performing the functions. A person skilled in the art should easily be aware that, with reference to units and algorithm steps of the examples described in embodiments disclosed in this specification, this application can be implemented by hardware or a combination of hardware and computer software. Whether a function is performed by hardware or computer software driving hardware depends on particular applications and design constraint conditions of the technical solutions. A person skilled in the art may use different methods to implement the described functions for each particular application, but it should not be considered that the implementation goes beyond the scope of this application.

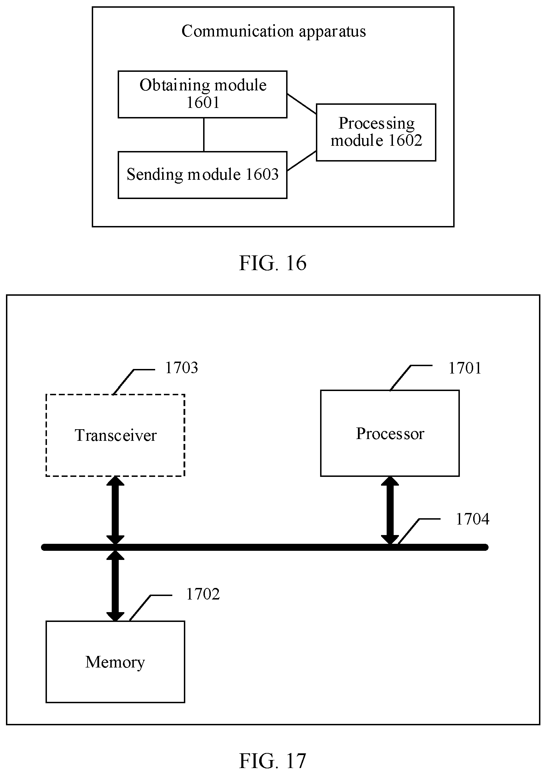

FIG. 16 is a block diagram of a communication apparatus 1600 according to an embodiment of this application. The apparatus 1600 includes an obtaining module 1601. The obtaining module 1601 may be configured to implement a corresponding obtaining function. The obtaining module 1601 may also be referred to as an obtaining unit.

The apparatus 1600 further includes a processing module 1602. The processing module 1602 may be configured to implement a corresponding processing function.

The apparatus 1600 further includes a sending module 1603. The sending module 1603 may be configured to implement a corresponding sending function. The sending module 1603 may also be referred to as a sending unit.

Optionally, the apparatus 1600 further includes a storage unit. The storage unit may be configured to store instructions and/or data. The processing unit 1602 may read the instructions and/or the data in the storage unit, to enable the apparatus to implement an action of a related apparatus in the foregoing method embodiments.

The apparatus 1600 may be configured to perform an action performed by the first device or the second device in the foregoing method embodiments. In this case, the apparatus 1600 may be a component of the first device or the second device. The obtaining module 1601 is configured to perform an obtaining-related operation of the first device or the second device in the foregoing method embodiments. The processing module 1602 is configured to perform a processing-related operation of the first device or the second device in the foregoing method embodiments. The sending module 1603 is configured to perform a sending-related operation of the first device or the second device in the foregoing method embodiments.

In a design, the apparatus 1600 is configured to perform an action performed by any network element or any device in the foregoing method embodiments. In an embodiment, the communication apparatus may be configured to perform an operation of the first device in FIG. 5 or FIG. 15. For example:
The obtaining module 1601 is configured to obtain configuration information.

The processing module 1602 is configured to determine N groups of signals and/or M signals.

The sending module 1603 is configured to send the N groups of signals to a second device. The N groups of signals are respectively located in N time windows, each of the N groups of signals includes M signals, and an M^{th} signal in an i^{th} group of signals and the 1^{st} signal in an (i+1)^{th} group of signals occupy a same frequency domain resource. Mᵢ signals in the i^{th} group of signals are located on Mᵢ resources, time domain resources of the Mᵢ resources are different, a frequency domain resource of any one of the Mᵢ resources is one of Lᵢ frequency domain resources, and two adjacent frequency domain resources in the Lᵢ frequency domain resources partially overlap. The i^{th} group of signals and the (i+1)^{th} group of signals belong to the N groups of signals, i is any integer greater than or equal to 1 and less than or equal to N-1, N, M, or Mi is any integer greater than or equal to 2, and Lᵢ is any integer greater than or equal to 2 and less than or equal to Mᵢ.

It should be understood that a specific process in which the modules perform the foregoing corresponding steps is described in detail in the foregoing method embodiment. For brevity, details are not described herein.

In addition, the obtaining module 1601, the processing module 1602, and the sending module 1603 in the communication apparatus may further implement other operations or functions of the first device in the foregoing method. Details are not described herein again.

In another embodiment, the communication apparatus may be configured to perform an operation of the second device in FIG. 5 or FIG. 15. For example:
The obtaining module 1601 is configured to receive N groups of signals from a first device. The N groups of signals are respectively located in N time windows, each of the N groups of signals includes M signals, and an M^{th} signal in an i^{th} group of signals and the 1^{st} signal in an (i+1)^{th} group of signals occupy a same frequency domain resource. Mᵢ signals in the i^{th} group of signals are located on Mᵢ resources, time domain resources of the Mᵢ resources are different, a frequency domain resource of any one of the Mᵢ resources is one of Lᵢ frequency domain resources, and two adjacent frequency domain resources in the Lᵢ frequency domain resources partially overlap. The i^{th} group of signals and the (i+1)^{th} group of signals belong to the N groups of signals, i is any integer greater than or equal to 1 and less than or equal to N-1, N, M, or Mi is any integer greater than or equal to 2, and Lᵢ is any integer greater than or equal to 2 and less than or equal to Mᵢ.

The obtaining module 1601, the processing module 1602, and the sending module 1603 in the communication apparatus may further implement other operations or functions of the second device in the foregoing method. Details are not described herein again.

Optionally, the obtaining module 1601 in the apparatus 1600 may also be referred to as a receiving module. The receiving module and the sending module may be integrated into a transceiver module. It should be understood that a specific process in which the modules perform the foregoing corresponding steps is described in detail in the foregoing method embodiment. For brevity, details are not described herein.

FIG. 17 is a diagram of another possible structure of the communication apparatus in the foregoing embodiment. The communication apparatus includes a processor 1701. As shown in FIG. 17, the communication apparatus may further include at least one memory 1702, configured to store program instructions and/or data. The memory 1702 is coupled to the processor 1701. The coupling in this embodiment of this application may be an indirect coupling or a communication connection between apparatuses, units, or modules in electrical, mechanical, or other forms, and is used for information exchange between the apparatuses, the units, or the modules. The processor 1701 may operate with the memory 1702. The processor 1701 may execute the program instructions stored in the memory 1702. At least one of the at least one memory may be included in the processor.

The communication apparatus may further include a transceiver 1703, configured to communicate with another device by using a transmission medium, so that the apparatus can communicate with the another device. Optionally, the transceiver 1703 may be an interface, a bus, a circuit, or an apparatus that can implement receiving and sending functions. Optionally, the transceiver 1703 may include a receiver and a transmitter.

A specific connection medium between the processor 1701, the memory 1702, and the transceiver 1703 is not limited in this embodiment of this application. In this embodiment of this application, the processor 1701, the memory 1702, and the transceiver 1703 are connected by using a bus 1704 in FIG. 17, and the bus is represented by using a bold line in FIG. 17. It is merely an example for description, and a connection manner between other components is not limited thereto. The bus may be classified into an address bus, a data bus, a control bus, or the like. For ease of representation, only one bold line is used to represent the bus in FIG. 17, but this does not mean that there is only one bus or only one type of bus.

For example, in an embodiment, the processor 1701 is configured to perform another operation or function of the first device. The transceiver 1703 is configured to implement communication between the communication apparatus and another network element/device (for example, a network device or another terminal device).

In another embodiment, the processor 1701 is configured to perform another operation or function of the second device. The transceiver 1703 is configured to implement communication between the communication apparatus and another network element/device (for example, a terminal device).

One or more of the foregoing modules or units may be implemented by software, hardware, or both. When any one of the foregoing modules or units is implemented by software, the software exists in a form of computer program instructions, and is stored in the memory. The processor may be configured to execute the program instructions and implement the foregoing method procedure. The processor may include but is not limited to at least one of the following types of compute devices running software: a central processing unit (central processing unit, CPU), a microprocessor, a digital signal processor (digital signal processing, DSP), a microcontroller unit (microcontroller unit, MCU), or an artificial intelligence processor. Each compute device may include one or more cores configured to execute software instructions to perform an operation or processing. The processor may be built in a system-on-a-chip (system-on-a-chip, SoC) or an application-specific integrated circuit (application-specific integrated circuit, ASIC), or may be an independent semiconductor chip. In addition to the core configured to execute software instructions to perform an operation or processing, the processor may further include a necessary hardware accelerator, for example, a field programmable gate array (field programmable gate array, FPGA), a programmable logic device (programmable logic device, PLD), or a logic circuit that implements a dedicated logic operation.

When the foregoing module or unit is implemented by hardware, the hardware may be any one or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device, which may run necessary software or does not depend on software to perform the foregoing method procedure.

When the foregoing module or unit is implemented by software, the module or unit may be all or partly implemented in a form of a computer program product. The computer program product includes one or more computer instructions. When the computer program instructions are loaded and executed on a computer, the procedures or functions according to embodiments of this application are all or partly generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive (solid-state drive, SSD)), or the like.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

According to the method provided in embodiments of this application, this application further provides a computer program product. The computer program product includes computer program code, and when the computer program code is run on a computer, the computer is enabled to perform the method on the terminal device side in the foregoing method embodiments.

According to the method provided in embodiments of this application, this application further provides a computer program product. The computer program product includes computer program code, and when the computer program code is run on a computer, the computer is enabled to perform the method on the network device side in the foregoing method embodiments.

According to the method provided in embodiments of this application, this application further provides a computer-readable medium. The computer-readable medium stores program code, and when the program code is run on a computer, the computer is enabled to perform the method on the terminal device side in the foregoing method embodiments.

According to the method provided in embodiments of this application, this application further provides a computer-readable medium. The computer-readable medium stores program code, and when the program code is run on a computer, the computer is enabled to perform the method on the network device side in the foregoing method embodiments.

An embodiment of this application further provides a processing apparatus, including a processor and an interface. The processor is configured to perform the communication method in any one of the foregoing method embodiments.

A person of ordinary skill in the art may be aware that, with reference to units and algorithm steps in the examples described in embodiments disclosed in this specification, this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented via some interfaces. The indirect couplings or communication connections between the apparatuses or units may be implemented in electronic, mechanical, or other forms.

The units described as separate parts may or may not be physically separate, and parts displayed as units may or may not be physical units, may be located in one place, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or a contributing part, or a part of the technical solutions may be implemented in a form of a software product. The computer software product is stored in a storage medium, and includes several instructions for instructing a computer device (which may be a personal computer, a server, a network device, or the like) to perform all or a part of steps of the methods described in embodiments of this application. The storage medium includes various media that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending N groups of signals, wherein the N groups of signals are respectively located in N time windows, each of the N groups of signals comprises M signals, an M^{th} signal in an i^{th} group of signals and the 1^{st} signal in an (i+1)^{th} group of signals occupy a same frequency domain resource, Mᵢ signals in the i^{th} group of signals are located on Mᵢ resources, time domain resources of the Mᵢ resources are different, a frequency domain resource of any one of the Mᵢ resources is one of Lᵢ frequency domain resources, two adjacent frequency domain resources in the Lᵢ frequency domain resources partially overlap, the i^{th} group of signals and the (i+1)^{th} group of signals belong to the N groups of signals, i is any integer greater than or equal to 1 and less than or equal to N-1, N, M, or Mi is any integer greater than or equal to 2, and Lᵢ is any integer greater than or equal to 2 and less than or equal to Mᵢ.

2. The method according to claim 1, wherein
Mᵢ₊₁ signals in the (i+1)^{th} group of signals are located on Mᵢ₊₁ resources, time domain resources of the Mᵢ₊₁ resources are different, a frequency domain resource of any one of the Mᵢ₊₁ resources is one of Lᵢ₊₁ frequency domain resources, two adjacent frequency domain resources in the Lᵢ₊₁ frequency domain resources partially overlap, the Lᵢ₊₁ frequency domain resources are the same as the Lᵢ frequency domain resources, and Lᵢ₊₁ is any integer greater than or equal to 2 and less than or equal to Mᵢ₊₁.

3. The method according to claim 1 or 2, wherein
a frequency domain resource of an m^{th} resource in the Mᵢ resources is different from a frequency domain resource of an m^{th} resource in the Mᵢ₊₁ resources, and m is any integer greater than or equal to 1 and less than or equal to M.

4. The method according to claim 3, wherein
a frequency of a frequency domain resource of an x^{th} resource in the Mᵢ resources or the Mᵢ₊₁ resources is lower than a frequency of a frequency domain resource of an (x+1)^{th} resource, and x is any integer greater than or equal to 1 and less than or equal to M-1; or
a frequency domain resource of a y^{th} resource in the Mᵢ resources or the Mᵢ₊₁ resources is a frequency domain resource with a highest frequency, a frequency domain resource of a (y+1)^{th} resource is a frequency domain resource with a lowest frequency, and y is an integer greater than or equal to 1 and less than or equal to M-1.

5. The method according to claim 4, wherein
a frequency domain resource of the 1^{st} resource in the Mᵢ resources is a frequency domain resource with a lowest frequency, and a frequency domain resource of the 1^{st} resource in the Mᵢ₊₁ resources is a frequency domain resource with a highest frequency; or
a frequency of the frequency domain resource of the 1^{st} resource in the Mᵢ resources is higher than a frequency of the frequency domain resource of the 1^{st} resource in the Mᵢ₊₁ resources.

6. The method according to claim 3, wherein
a frequency of a frequency domain resource of an x^{th} resource in the Mᵢ resources or the Mᵢ₊₁ resources is higher than a frequency of a frequency domain resource of an (x+1)^{th} resource, and x is any integer greater than or equal to 1 and less than or equal to M-1; or
a frequency domain resource of a y^{th} resource in the Mᵢ resources or the Mᵢ₊₁ resources is a frequency domain resource with a lowest frequency, a frequency domain resource of a (y+1)^{th} resource is a frequency domain resource with a highest frequency, and y is an integer greater than or equal to 1 and less than or equal to M-1.

7. The method according to claim 6, wherein
a frequency domain resource of the 1^{st} resource in the Mᵢ resources is a frequency domain resource with a highest frequency, and a frequency domain resource of the 1^{st} resource in the Mᵢ₊₁ resources is a frequency domain resource with a lowest frequency; or
a frequency of the frequency domain resource of the 1^{st} resource in the Mᵢ resources is lower than a frequency of the frequency domain resource of the 1^{st} resource in the Mᵢ₊₁ resources.

8. The method according to any one of claims 2 to 7, wherein
a time interval between a time domain resource of a j^{th} resource in the Mᵢ resources and a time domain resource of a p^{th} resource in the Mᵢ₊₁ resources is *T* + *Tₛ* or *T* - (*M* - 1)*Tₛ*, a frequency domain resource of the j^{th} resource is the same as a frequency domain resource of the p^{th} resource, j and p are any integers greater than or equal to 1 and less than or equal to M, *Tₛ* is a time interval between two adjacent time domain resources in the Mᵢ resources or the Mᵢ₊₁ resources, and T is an interval between a start sending moment of the Mᵢ signals and a start sending moment of the Mᵢ₊₁ signals.

9. The method according to claim 3, wherein
a frequency domain resource of a y^{th} resource in the Mᵢ resources is a frequency domain resource with a highest frequency, a frequency domain resource of a (y+1)^{th} resource is a frequency domain resource with a lowest frequency, a frequency domain resource of a w^{th} resource in the Mᵢ₊₁ resources is a frequency domain resource with a lowest frequency, a frequency domain resource of a (w+1)^{th} resource is a frequency domain resource with a highest frequency, and y and w are integers greater than or equal to 1 and less than or equal to M-1; or
a frequency of a frequency domain resource of an x^{th} resource in the Mᵢ resources is lower than a frequency of a frequency domain resource of an (x+1)^{th} resource, a frequency of a frequency domain resource of an n^{th} resource in the Mᵢ₊₁ resources is higher than a frequency of a frequency domain resource of an (n+1)^{th} resource, and x and n are any integers greater than or equal to 1 and less than or equal to M-1.

10. The method according to claim 3, wherein
a frequency domain resource of a y^{th} resource in the Mᵢ resources is a frequency domain resource with a lowest frequency, a frequency domain resource of a (y+1)^{th} resource is a frequency domain resource with a highest frequency, a frequency domain resource of a w^{th} resource in the Mᵢ₊₁ resources is a frequency domain resource with a highest frequency, a frequency domain resource of a (w+1)^{th} resource is a frequency domain resource with a lowest frequency, and y and w are integers greater than or equal to 1 and less than or equal to M-1; or
a frequency of a frequency domain resource of an x^{th} resource in the Mᵢ resources is higher than a frequency of a frequency domain resource of an (x+1)^{th} resource, a frequency of a frequency domain resource of an n^{th} resource in the Mᵢ₊₁ resources is lower than a frequency of a frequency domain resource of an (n+1)^{th} resource, and x and n are any integers greater than or equal to 1 and less than or equal to M-1.

11. The method according to claim 9 or 10, wherein
a time interval between a time domain resource of a j^{th} resource in the Mᵢ resources and a time domain resource of a p^{th} resource in the Mᵢ₊₁ resources is *T* + (*M* - 1 - 2*q*)*Tₛ* or *T* - (*M* - 1 - 2*q*)*Tₛ*, a frequency domain resource of the j^{th} resource is the same as a frequency domain resource of the p^{th} resource, j and p are any integers greater than or equal to 1 and less than or equal to M, *Tₛ* is a time interval between two adjacent time domain resources in the Mᵢ resources or the Mᵢ₊₁ resources, *q* is an integer greater than or equal to 0 and *q* is less than a quantity of frequency domain resources in the Mᵢ resources or the Mᵢ₊₁ resources, and T is an interval between a start sending moment of the Mᵢ signals and a start sending moment of the Mᵢ₊₁ signals.

12. The method according to any one of claims 1 to 11, wherein the method further comprises:
sending a plurality of pieces of information, wherein each of the plurality of pieces of information indicates a plurality of resource reservation periods, the time interval between the time domain resource of the j^{th} resource in the Mᵢ resources and the time domain resource of the p^{th} resource in the Mᵢ₊₁ resources is one of the plurality of resource reservation periods, the frequency domain resource of the j^{th} resource is the same as the frequency domain resource of the p^{th} resource, and j and p are any integers greater than or equal to 1 and less than or equal to M.

13. The method according to any one of claims 1 to 12, wherein a quantity of frequency resources occupied by the M signals is the same as a quantity of time domain resources occupied by the M signals.

14. The method according to claim 1 or 2, wherein
a frequency domain resource of the 1^{st} resource in the Mᵢ resources is the same as a frequency domain resource of an M^{th} resource, a frequency domain resource of the 1^{st} resource in the Mᵢ₊₁ resources is the same as a frequency domain resource of an M^{th} resource, a frequency domain resource of an m^{th} resource in the Mᵢ resources is the same as a frequency domain resource of an m^{th} resource in the Mᵢ₊₁ resources, and m is any integer greater than or equal to 1 and less than or equal to M.

15. The method according to claim 14, wherein
the frequency domain resource of the 1^{st} resource in the Mᵢ resources and the frequency domain resource of the M^{th} resource are frequency domain resources with a lowest frequency; or
the frequency domain resource of the 1^{st} resource in the Mᵢ resources and the frequency domain resource of the M^{th} resource are frequency domain resources with a highest frequency.

16. The method according to claim 14 or 15, wherein a quantity of frequency resources occupied by the M signals is less than a quantity of time domain resources occupied by the M signals.

17. The method according to any one of claims 1 to 16, wherein the method further comprises: determining the N groups of signals and/or the M signals.

18. The method according to any one of claims 1 to 17, wherein the N time windows occupy a same time length.

19. The method according to any one of claims 1 to 18, wherein the N groups of signals are used for sensing.

20. A communication method, comprising:
receiving N groups of signals, wherein the N groups of signals are respectively located in N time windows, each of the N groups of signals comprises M signals, an M^{th} signal in an i^{th} group of signals and the 1^{st} signal in an (i+1)^{th} group of signals occupy a same frequency domain resource, Mᵢ signals in the i^{th} group of signals are located on Mᵢ resources, time domain resources of the Mᵢ resources are different, a frequency domain resource of any one of the Mᵢ resources is one of Lᵢ frequency domain resources, two adjacent frequency domain resources in the Lᵢ frequency domain resources partially overlap, the i^{th} group of signals and the (i+1)^{th} group of signals belong to the N groups of signals, i is any integer greater than or equal to 1 and less than or equal to N-1, N, M, or Mi is any integer greater than or equal to 2, and Lᵢ is any integer greater than or equal to 2 and less than or equal to Mᵢ.

21. The method according to claim 20, wherein
Mᵢ₊₁ signals in the (i+1)^{th} group of signals are located on Mᵢ₊₁ resources, time domain resources of the Mᵢ₊₁ resources are different, a frequency domain resource of any one of the Mᵢ₊₁ resources is one of Lᵢ₊₁ frequency domain resources, two adjacent frequency domain resources in the Lᵢ₊₁ frequency domain resources partially overlap, the Lᵢ₊₁ frequency domain resources are the same as the Lᵢ frequency domain resources, and Lᵢ₊₁ is any integer greater than or equal to 2 and less than or equal to Mᵢ₊₁.

22. The method according to claim 20 or 21, wherein
a frequency domain resource of an m^{th} resource in the Mᵢ resources is different from a frequency domain resource of an m^{th} resource in the Mᵢ₊₁ resources, and m is any integer greater than or equal to 1 and less than or equal to M.

23. The method according to any one of claims 20 to 22, wherein the method further comprises:
receiving a plurality of pieces of information, wherein each of the plurality of pieces of information indicates a plurality of resource reservation periods, the time interval between the time domain resource of the j^{th} resource in the Mᵢ resources and the time domain resource of the p^{th} resource in the Mᵢ₊₁ resources is one of the plurality of resource reservation periods, the frequency domain resource of the j^{th} resource is the same as the frequency domain resource of the p^{th} resource, and j and p are any integers greater than or equal to 1 and less than or equal to M.

24. The method according to any one of claims 20 to 23, wherein a quantity of frequency resources occupied by the M signals is the same as a quantity of time domain resources occupied by the M signals.

25. The method according to claim 20 or 21, wherein
a frequency domain resource of the 1^{st} resource in the Mᵢ resources is the same as a frequency domain resource of an M^{th} resource, a frequency domain resource of the 1^{st} resource in the Mᵢ₊₁ resources is the same as a frequency domain resource of an M^{th} resource, a frequency domain resource of an m^{th} resource in the Mᵢ resources is the same as a frequency domain resource of an m^{th} resource in the Mᵢ₊₁ resources, and m is any integer greater than or equal to 1 and less than or equal to M.

26. The method according to any one of claims 20 to 25, wherein the N groups of signals are used for sensing.

27. A communication apparatus, comprising:
a unit or a module configured to perform the method according to any one of claims 1 to 19; or
a unit or a module configured to implement the method according to any one of claims 20 to 26.

28. A computer-readable storage medium, wherein the computer-readable storage medium is configured to store a computer program, and when the computer program is run on a computer, the computer is enabled to perform the method according to any one of claims 1 to 19, or the computer is enabled to perform the method according to any one of claims 20 to 26.

29. A computer program product, wherein the computer program product comprises computer program code, and when the computer program code is run, the method according to any one of claims 1 to 19 is implemented, or the method according to any one of claims 20 to 26 is implemented.
